# EUROPÄISCHE PATENTANMELDUNG

(11) **EP 4 129 769 A1**
(43) Veröffentlichungstag der Anmeldung: **08.02.2023**
(21) Anmeldenummer: 22188856.3
(22) Anmeldetag: 04.08.2022
(51) Int. Cl.: B60R 11/02

(54) **AUFNAHMEEINRICHTUNG FÜR EIN FAHRZEUG ZUR AUFNAHME EINES DRITTGEGENSTANDS**

(30) Priorität: 05.08.2021 DE 102021120446
(71) Anmelder: M-motion-design GmbH, 92318 Neumarkt i.d.OPf. (DE)
(72) Erfinder: Gärtner, Andreas, 92361 Berngau (DE); Meier, Stefan, 92318 Neumarkt i.d.OPf. (DE)
(74) Vertreter: Hafner & Kohl PartmbB

(57) **Zusammenfassung**

Aufnahmeeinrichtung (33) für ein Fahrzeug zur Aufnahme eines Drittgegenstands (32), insbesondere eines Smartphones, umfassend wenigstens ein eine Vertiefung (30) aufweisendes Aufnahmeelement (31) für einen Drittgegenstand (32), wobei das Aufnahmeelement (31) an einem oberen Rand (60) der Vertiefung (30) wenigstens zwei, insbesondere einander zulaufende, Auflageabschnitte (61, 62) zur Lagerung des Drittgegenstands (32) und in einem Boden- und/oder Seitenwandbereich (63, 64) der Vertiefung (30) einen Anlageabschnitt (65, 66) zur Lagerung des Drittgegenstands (32) aufweist.

## Beschreibung

Die Erfindung betrifft eine Aufnahmeeinrichtung für ein Fahrzeug zur Aufnahme eines Drittgegenstands.

Entsprechende Aufnahmeeinrichtungen für Fahrzeuge zur Aufnahme eines Drittgegenstands sind aus dem Stand der Technik dem Grunde nach bekannt. So ist es beispielsweise bekannt, im Fond von Automobilen Aufnahmeeinrichtungen zu verbauen. Derartige Aufnahmeeinrichtungen können als Getränkehalter und/oder Handyhalter ausgebildet sein.

Der Erfindung liegt die Aufgabe zugrunde, eine Aufnahmeeinrichtung anzugeben, welche insbesondere im Hinblick auf eine einfache sowie kostengünstige Maßnahme den Bedienkomfort und die Nutzungsmöglichkeiten erhöht.

Die Aufgabe wird durch eine Aufnahmeeinrichtung zum Verbau in einem Fond eines Kraftfahrzeugs gemäß Anspruch 1 gelöst. Die hierzu abhängigen Ansprüche betreffen mögliche Ausführungsformen der Aufnahmeeinrichtung.

Die Erfindung betrifft eine Aufnahmeeinrichtung mit wenigstens einem durch eine Vertiefung definiertes Aufnahmeelement für einen Drittgegenstand, wobei das Aufnahmeelement an einem oberen Rand der Vertiefung zwei, insbesondere zumindest abschnittsweise, bevorzugt überwiegend, besonders bevorzugt vollständig, einander zulaufende, Auflageabschnitte zur Lagerung des Drittgegenstands und in einem Boden- und/oder Seitenwandbereich der Vertiefung einen Anlageabschnitt zur Lagerung des Drittgegenstands aufweist. Durch das Aufnahmeelement der Aufnahmeeinrichtung kann beispielsweise wenigstens ein Drittgegenstand in die Vertiefung eingelegt und/oder aufgelegt werden. Damit kann die Aufnahmeeinrichtung eine Aufbewahrungsfunktion erfüllen, sodass ein Drittgegenstand, z. B. ein Smartphone oder ein sonstiger länglicher, insbesondere quaderförmiger, Körper gekippt in das Aufnahmeelement eingesetzt werden kann. Durch die gekippte Positionierung des Drittgegenstands liegt dieser an zwei Auflageabschnitten, insbesondere an zwei Auflagekanten, an dem oberen Ende bzw. dem oberen Rand des Aufnahmeelements und zusätzlich an dem Anlageabschnitt des Aufnahmeelements an. Hierbei befindet sich der Anlageabschnitt in einem Boden- und/oder Seitenwandbereich der Vertiefung des Aufnahmeelements.

Nachfolgend wird beispielhaft die Aufnahmeeinrichtung als eine in oder an einer Armlehne angeordnete oder ausgebildete Aufnahmeeinrichtung beschrieben, hierbei kann die Armlehne in einem Fahrzeugfond oder an einem anderen Ort des Fahrzeugs angeordnet oder ausgebildet sein. Auch ist es möglich die hierin beschriebene Aufnahmeeinrichtung unabhängig (a) zu einem Verbau in oder an einer Armlehne oder (b) zu einem Verbau in oder an einem Fahrzeug einzusetzen.

Durch die insgesamt wenigstens drei Abschnitte und damit wenigstens drei Kontaktbereiche des Drittgegenstands mit der Aufnahmeeinrichtung, kann der Drittgegenstand bewegungsgesichert in der Vertiefung der Aufnahmeeinrichtung gelagert bzw. aufgenommen werden.

Es ist möglich, dass wenigstens ein Auflageabschnitt, insbesondere sämtliche Auflageabschnitte, als Kante ausgebildet ist bzw. sind und/oder der Anlageabschnitt als zumindest eine Anlagefläche ausgebildet ist. Die Anlagefläche kann dazu dienen den, eine ebene Fläche aufweisenden Drittgegenstand punktuell oder linienartig zu berühren. An den Auflagekanten des Auflageabschnitts kann der Drittgegenstand jeweils einen punktförmigen Kontaktabschnitt aufweisen, folglich kann im Falle zweier einander zulaufender Auflagekanten der Drittgegenstand an jeder dieser Auflagekanten einen Berührpunkt aufweisen und durch die zulaufende Ausrichtung der Auflagekanten eine Zwangsführung zu einem Zentrierposition erwirken. Damit kann der flächige und/oder der eine längliche quadergrundform aufweisende Drittgegenstand über jeweils einen punktuellen Kontaktpunkte mit der ersten und der weiteren Auflagekante und über einen linienförmigen Kontaktabschnitt oder über zumindest zwei, insbesondere über exakt zwei, punktuelle Kontaktabschnitte in dem Aufnahmeelement aufgenommen bzw. abgestützt sein.

Durch die zwei einander zulaufenden Auflagekanten an der Oberseite der Vertiefung können unterschiedliche Drittgegenstände definiert aufgenommen werden. Breitere Drittgegenstände nehmen dabei eine steilere bzw. näher an der Vertikalen liege Position als schmalere Drittgegenstände.

Der Anlageabschnitt kann beispielsweise wenigstens zwei Anlageflächen aufweisen, wobei eine Haupterstreckungsebene einer zumindest abschnittsweisen, bevorzugt überwiegenden, besonders bevorzugt vollständig, ebenen ersten Anlagefläche mit der Haupterstreckungsebene einer weiteren, zumindest abschnittsweise, bevorzugt überwiegend, besonders bevorzugt vollständig, eben ausgebildeten weiteren Anlagefläche einen Winkel γ von kleiner 90°, bevorzugt kleiner 80°, besonders bevorzugt kleiner 75°, höchst bevorzugt kleiner 70°, einschließt. Dadurch, dass der Winkel zwischen der ersten und zweiten Anlagefläche kleiner 90° ist, kann aufgrund eines Rutschens eines Drittgegenstands eine Führungsfunktion bzw. eine Zentrierfunktion auf den Drittgegenstand erwirkt werden, welche dazu genutzt werden kann, den Drittgegenstand in eine vordefinierte Position und/oder Ausrichtung, insbesondere eine vordefinierte Schräglage, relativ zu dem Aufnahmeelement zu verbringen. Mit anderen Worten kann der Boden des Aufnahmeelements bzw. der Vertiefung zu wenigstens einer, insbesondere abschnittsweise ebenen, Seitenwand schräg verlaufen, sodass ein in das Aufnahmeelement eingesetzter Drittgegenstand aufgrund der Schwerkraft und der Schräglage des Bodens zu dem tieferliegenden Bereich des Aufnahmeelements bewegt wird.

In einer optionalen Ausführungsform kann es vorgesehen sein, dass der Anlageabschnitt wenigstens eine Bodenanlagefläche aufweist, wobei eine Haupterstreckungsebene der zumindest abschnittsweisen, bevorzugt überwiegenden, besonders bevorzugt vollständig, ebenen Bodenanlagefläche mit einer Grunderstreckungsebene der Armlehnenanordnung oder einer Horizontalebene im bestimmungsgemäßen Einsatz der Armlehnenanordnung einen Winkel δ von größer 5°, bevorzugt von größer 10°, besonders bevorzugt von größer 15°, höchst bevorzugt von größer 17,5°, weiter bevorzugt von größer 20°, einschließt. Auch diese Schräglage der Bodenanlagefläche relativ zur Horizontalebene im bestimmungsgemäßen Einsatz des Aufnahmeelements führt zu einer, ggf. weitergehenden, gezielten Verlagerung eines in das Aufnahmeelement aufgenommenen Drittgegenstands.

Das die Vertiefung definierende Aufnahmeelement kann beispielsweise in der Draufsicht eine n-eckige Grundform aufweisen, bevorzugt weist das Aufnahmeelement eine mindestens 5-eckige Grundform auf, besonders bevorzugt weist das Aufnahmeelement eine mindestens 6-eckige Grundform auf. Die Grundform des Aufnahmeelement kann beispielsweise punkt- und/oder spiegelsymmetrisch ausgebildet sein. In einer optionalen Ausführungsform weist die Grundform eine spiegelsymmetrische, aber nicht punktsymmetrische Grundform auf. Bevorzugt verläuft die Spiegelachse der spiegelsymmetrischen Grundform des Aufnahmeelement in der Draufsicht aus betrachtet parallel oder rechtwinklig zu einer Längsachse der Aufnahmeeinrichtung, insbesondere parallel oder rechtwinklig zu einer Längsachse einer die Aufnahmeeinrichtung umfassenden Armlehnenanordnung oder eines Armlehnenteils der Armlehnenanordnung.

Das die Vertiefung definierende Aufnahmeelement kann beispielsweise in der Draufsicht eine mit einer Unterbrechung versehene, insbesondere geradlinige, Grundkante einer Grundform und/oder, insbesondere ebene, Seitenwandfläche aufweisen. Die Unterbrechung kann zur Aufnahme eines Abschnitts eines Ladekabels zum Anschluss des Ladekabels an einem Drittgegenstand während dessen Aufnahme in dem Aufnahmeelement vorgesehen sein. Hierbei kann es vorgesehen sein, das die wenigstens zwei Auflageabschnitte, insbesondere die wenigstens zwei Auflagekanten, der Grundkante gegenüberliegen angeordnet oder ausgebildet sind.

Wenigstens ein als Auflagekante ausgebildeter Auflageabschnitt kann beispielsweise in seiner Haupterstreckungslinie, insbesondere beide Auflagekanten jeweils mit deren Haupterstreckungslinien, mit dem als Grundkante ausgebildeten Anlageabschnitt in der Draufsicht einen zum Innenraum der Vertiefung zugewandten Innenwinkel ε im Bereich von kleiner 90°, bevorzugt von kleiner 85°, besonders bevorzugt von kleiner 80°, höchst bevorzugt von kleiner 75°, aufweisen. Der Innenwinkel ε kann beispielsweise mindestens 30°, bevorzugt mindestens 45°, besonders bevorzugt mindestens 55°, höchst bevorzugt mindestens 65°, weiter bevorzugt mindestens 70°, einschließen. Dadurch, dass wenigstens eine Auflagekante, insbesondere beide oder sämtliche Auflagekanten, einen spitzen Winkel ε zur Grundkante des Aufnahmeelements aufweist bzw. aufweisen, kann erreicht werden, dass ein an einer flächigen, die Grundkante umfassenden Wand angelegter länglicher quaderförmiger Drittgegenstand bei dessen Einlegen in die Vertiefung des Aufnahmeelements schwerkraftbedingt zu einem Zielort bzw. Bestimmungsort geführt wird bzw. sich dorthin begibt. Mit anderen Worten können die beiden Auflagekanten derart spitzwinklig (vgl. Winkel ζ) zueinander ausgerichtet sein, dass ein an beiden Auflagekanten anliegender länglicher quaderförmiger Drittgegenstand sich in eine zu dem fiktiven Treffpunkt der beiden Auflagekanten hin gerichtete Zwangsposition begibt. Durch das Erreichen der zwangsgeführten Sollposition aufgrund der entsprechend zueinander ausgerichteten Auflagekanten, kann auf eine definierte Ausrichtung und Positionierung des Drittgegenstands innerhalb des Aufnahmeelements erreicht werden, zumindest weitgehend unabhängig von der Positionierung und/oder Ausrichtung des Drittgegenstands bei dessen einlegen in die Vertiefung des Aufnahmeelements.

Die Auflageabschnitte, insbesondere die als Auflagekanten ausgebildeten Auflageabschnitte, können beispielsweise zumindest abschnittsweise, bevorzugt überwiegend, besonders bevorzugt gänzlich, spiegelsymmetrisch ausgebildet sein. Bevorzugt sind die Auflageabschnitte, insbesondere die Auflagekanten, spiegelsymmetrisch zu einer Längsachse der Aufnahmeeinrichtung und/oder zu einer Längsachse eines die Aufnahmeeinrichtung umfassenden Armlehnenteils ausgerichtet. Hierbei können die Auflagekanten eine nicht punktsymmetrische Form bzw. eine zumindest abschnittsweise geradlinige Form aufweisen.

Die Aufnahmeeinrichtung kann beispielsweise einen wenigstens eine Vertiefung aufweisenden Grundkörper und einen in der grundkörperseitigen Vertiefung angeordneten oder ausgebildeten, das wenigstens eine Aufnahmeelement bildenden Einsatzkörper korrespondierender Geometrie aufweisen. Mit anderen Worten kann das Aufnahmeelement in eine Vertiefung der Aufnahmeeinrichtung eingesetzt werden, wobei das Aufnahmeelement als Einsatzkörper in eine zu diesem eine korrespondierende Geometrie aufweisende Öffnung eingesetzt werden kann bzw. eingesetzt wird.

Die die Vertiefung in dem Gehäusekörper definierenden Winkel können beispielsweise kleiner als die die Vertiefung in dem Einsatzkörper definierenden Winkel ausgebildet sein. Die die Vertiefung in dem Gehäusekörper definierenden Radien bzw. Winkel sind - dies gilt insbesondere für die den Öffnungsbereich der Vertiefung bildenden Radien bzw. Winkel - beispielsweise in einem Bereich oberhalb von 2,5 mm, bevorzugt von oberhalb 3,5 mm. Die die Vertiefung in dem Einsatzkörper definierenden Radien bzw. Winkel sind - dies gilt insbesondere für die den Öffnungsbereich der Vertiefung bildenden Radien bzw. Winkel - beispielsweise oberhalb 2,5 mm, bevorzugt von oberhalb 3,5 mm.

Der Einsatzkörper kann beispielsweise aus einem weich-elastischen Kunststoffmaterial, insbesondere einem thermoplastischen Elastomer, ausgebildet sein.

Die Aufnahmeeinrichtung kann beispielsweise mehrere Aufnahmeelemente zumindest abschnittsweise, gegebenenfalls vollständig, unterschiedlicher Grundform aufweisen. So kann die Aufnahmeeinrichtung mehrere jeweils eine Vertiefung ausbildende Aufnahmeelemente umfassen, wobei die jeweiligen Aufnahmeelemente ein einstückiges bzw. integrales Bauteil ausbilden können oder als separate, zusammengebaute und/oder mittelbar oder unmittelbar miteinander befestigte Bauteile ausbilden.

Der Aufnahmeeinrichtung kann beispielsweise wenigstens ein, insbesondere buchsen- oder steckerartiges, Anschlusselement zum Anschluss eines Lade- und/oder Datenübertragungselements zugeordnet sein. Damit kann es ermöglicht werden, einen in dem Aufnahmeelement aufgenommenen Drittgegenstand, z. B. ein Smartphone, im in dem Aufnahmeelement aufgenommenen Zustand vermittels eines Datenübertragungselements, z. B. eines Ladekabels, das in dem Anschlusselement der Aufnahmeeinrichtung, insbesondere elektrisch, zu verbinden bzw. stromleitend und/oder datenübertragend zu verbinden. In diesem Zusammenhang ist die zentrierende bzw. zwangsführende und insbesondere schwerkraftbedingt erfolgende Positionierung und/oder Ausrichtung des Drittgegenstands aufgrund des schrägen Bodens und/oder der einander zulaufenden Auflagekanten vorteilhaft, da bevorzugt die vordefinierte Soll- bzw. Zwangspositionierung und/oder Ausrichtung des Drittgegenstands, dessen Verbindbarkeit bzw. dessen Anschluss mit den Datenübertragungselement erleichtert.

Die Aufnahmeeinrichtung kann beispielsweise wenigstens ein Aufnahmeelement aufweisen, das in der Draufsicht aus betrachtet zwei einander zulaufende, insbesondere geradlinige, Auflagebereiche bzw. Auflagekanten umfasst. Hierbei können die Auflagekanten einen horizontalen Mindestabstand von mindestens 40 mm, bevorzugt von mindestens 50 mm, besonders bevorzugt von mindestens 55 mm, höchst bevorzugt von mindestens 60 mm, aufweisen. Der horizontale Maximalabstand der beiden Auflagekanten kann beispielsweise maximal 150 mm, bevorzugt maximal 120 mm, besonders bevorzugt maximal 100 mm, höchst bevorzugt maximal 90 mm, weiter bevorzugt maximal 85 mm, aufweisen. Insbesondere dann, wenn die Auflagekanten im Bereich der genannten horizontalen Mindestabstände und zugleich im Bereich der genannten Maximalabstände liegt, kann eine vorteilhafte Geometrie erreicht werden, welche bei Einlegen eines Smartphones sowohl dessen schwerkraftbedingte Zentrierung bzw. Zwangsführung und zugleich nach Erreichen der Soll- bzw. Zwangsposition ein zuverlässiges Halten des Smartphones innerhalb des Aufnahmeelements ermöglicht. Mit einem horizontalen Maximal- oder Minimalabstand ist hierbei der Abstand der Auflagekanten gemeint, welcher sich in einer Betrachtung der Draufsicht und/oder sich aus einer Projektion der Auflagekanten in eine Horizontalebene ergibt.

Armlehnenanordnung zum Verbau in einem Fond eines Kraftfahrzeugs, umfassend: (a) eine zur Lagerung eines eine Armauflagefläche umfassenden Armlehnenteils eingerichtete Tragstruktur, wobei die Tragstruktur in einem rotatorischen Bewegungsfreiheitsgrad um eine Rotationsachse in eine erste Stellung und in wenigstens eine weitere Stellung bewegbar gelagert ist; (b) ein eine Armauflagefläche umfassendes Armlehnenteil, wobei das Armlehnenteil in einem translatorischen Bewegungsfreiheitsgrad entlang einer Translationsachse in eine erste Stellung und in wenigstens eine weitere Stellung relativ zu der Tragstruktur auf oder an der Tragstruktur bewegbar gelagert ist. Durch die translatorische oder lineare Bewegung entlang des translatorischen Bewegungsfreiheitsgrad, kann beispielsweise eine Längsbewegbarkeit des Armlehnenteils erreicht werden, sodass ein Fahrzeuginsasse bedarfsweise bei herausgeklappter Armlehne diese nach dessen Wunsch in deren Länge einstellen kann. Die hierbei im Fond verbaute Armlehnenanordnung ist mit Bereich hinter den Fahrersitzen, z. B. im Bereich der Rückbank eines Kraftfahrzeugs angeordnet. Die Rotationsachse kann durch eine die Tragstruktur lagernde Lagerungseinrichtung definiert sein. Die Lagerungseinrichtung kann dabei im bestimmungs- bzw. ordnungsgemäß in einem Kraftfahrzeug verbauten Zustand der Armlehnenanordnung typischerweise gleichermaßen eine Schnittstelle zu einer Kraftfahrzeugkarosserie ausbilden, dabei kann die Lagerungseinrichtung beispielsweise in oder an einem die Rückenlehne und/oder die Sitzfläche eines Fondsitzplatzes ausgebildet oder befestigt sein. Beispielsweise ist die Tragstruktur in oder an einer die Rückenlehne bildenden Rückenlehnenstruktur und/oder in oder an einer die Sitzfläche des Rücksitzes bildenden Rücksitzstruktur eines Fahrzeugs befestigt. Hierbei kann an der Rückenlehnenstruktur und/oder an der Rücksitzstruktur beispielsweise eine Halterung, insbesondere form- und/oder kraft- und/oder stoffschlüssig, befestigt sein, an welcher die Tragstruktur zum Tragen des Armlehnenteils angeordnet oder ausgebildet ist. Die Translationsachse der translatorischen Bewegbarkeit des Armlehnenteils ist durch eine Längs- bzw. Zentralachse der Tragstruktur und/oder durch eine Längs- bzw. Zentralachse des Armlehnenteils definiert.

Es ist möglich, dass das Armlehnenteil zwischen einem eine erste Stellung definierenden ersten Anschlagelement und wenigstens einem eine weitere Stellung definierenden zweiten Anschlagelement an oder auf der Tragstruktur bewegbar gelagert ist. Das erste und/oder zweite Anschlagelement kann beispielsweise als Endanschlag, d. h. als Anschlag, welcher eine Endlagenbegrenzung ermöglicht, ausgebildet sein. Alternativ oder zusätzlich kann einer der beiden Anschläge oder ein weiterer Anschlag eine Zwischenposition zwischen den möglichen Endlagen der Bewegbarkeit des Armlehnenteils entlang der Translationsachse ausbilden. Ein Anschlag, welcher eine Zwischenposition als eine definierte Lageposition des Armlehnenteils zwischen den beiden Endlagen definiert kann auch als Zwischenanschlag bezeichnet werden. So kann beispielsweise ein Zwischenanschlag eine Zwischenverrastung umfassen, welche es ermöglicht, vermittels des Zwischenanschlags eine vordefinierte Position zwischen den beiden Endlagen gezielt einzunehmen. So kann vermittels eines Rastmechanismus ein Überdrücken einer definierten Schwellwertdruckkraft erforderlich sein, um eine solche Zwischenlagenposition zu verlassen. Der Anschlag für eine Bewegung in den kompakteren bzw. eingefahrenen Zustand kann durch eine Beaufschlagung der Tragstruktur, insbesondere einer stirnseitigen Beaufschlagung wenigstens einer Tragstrebe der Tragstruktur, durch einen Bestandteil des Armlehnenteils erfolgen. Eine Zwischenverrastung kann beispielsweise vermittels einer, insbesondere federvorgespannten, Kolben-Zylinder-Einheit erfolgen.

Die Tragstruktur kann beispielsweise aus wenigstens zwei beabstandet zueinander angeordneten, insbesondere parallel zueinander angeordneten, Tragstreben ausgebildet sein, wobei in oder auf den Tragstreben das Armlehnenteil entlang einer Längsachse der Tragstreben und/oder einer Längsachse des Armlehnenteils bewegbar gelagert ist. Das Armlehnenteil kann beispielsweise zumindest abschnittsweise, insbesondere überwiegend, besonders bevorzugt ausschließlich, in seiner Bewegung zwischen der ersten und der weiteren Stellung eine Bewegung entlang bzw. parallel zu der Längsachse der Tragstruktur, insbesondere der Tragstreben, und/oder zu der Längsachse des Armlehnenteils ausführen bzw. derart ausgebildet sein, dass eine solche Bewegung ermöglicht wird.

Es ist möglich, dass das Armlehnenteil eine Schlittenstruktur mit wenigstens zwei Führungsabschnitten umfasst, wobei ein erster Führungsabschnitt der Schlittenstruktur an einer ersten Tragstrebe und ein weiterer Führungsabschnitt der Schlittenstruktur an einer weiteren Tragstrebe jeweils linear beweglich gelagert ist. Die Schlittenstruktur kann beispielsweise als Gleitflächenlagerstelle des Armlehnenteils zu der Tragstruktur und damit zu den Tragstreben dienen. Vorzugsweise ist die Schlittenstruktur derart ausgebildet, dass wenigstens ein Führungsabschnitt, insbesondere beide oder sämtliche Führungsabschnitte der Tragstruktur, die ihnen zugeordneten Tragstreben überwiegend oder vollständig umschließen. Bevorzugt ist wenigstens ein Führungsabschnitt, bevorzugt sämtliche Führungsabschnitte, derart dimensioniert bzw. ausgebildet, dass dieser bzw. diese spielfrei die ihnen jeweils zugeordneten Tragstreben umschließen. Damit kann es erreicht werden, dass zwar eine Längsbewegbarkeit des Armlehnenteils relativ zu der Tragstruktur ausführbar ist, jedoch hierbei eine Relativbewegung senkrecht zu der Längsbewegung ausgeschlossen wird.

Die Schlittenstruktur kann beispielsweise über an den Führungsabschnitten angeordnete oder ausgebildete Reibmittel mit den Tragstreben beweglich gelagert sein. So kann z. B. wenigstens ein Führungsabschnitt, insbesondere sämtliche Führungsabschnitte, als Elastomerring(e) ausgebildet sein, welche(r) kraft- und/oder form- und/oder stoffschlüssig an der Schlittenstruktur bzw. an dem Armlehnenteil befestigt ist bzw. sind. Dabei kann beispielsweise wenigstens ein Führungsabschnitt eine kraftschlüssige Verbindungskomponente bzw. eine Vorspannkraft auf die Tragstruktur, insbesondere in eine Richtung senkrecht zur Längsachse der Tragstruktur, bevorzugt der wenigstens einen Tragstrebe, und/oder zur Längsachse der Armlehnenanordnung aufweisen. Durch eine derartige zumindest abschnittsweise, bevorzugt überwiegend, besonders bevorzugt ausschließlich, senkrecht zur Längsbewegung wirkende Vorspannkraft kann der Reibwiderstand bzw. die in Längsbewegungsrichtung aufzubringende Verschiebekraft als Schwellwert definiert eingestellt werden. Folglich kann bei Beaufschlagung des Armlehnenteils mit einer Kraft unterhalb dieses Schwellwerts eine Relativbewegung von Tragstruktur und Armlehnenteil verhindert und erst bei Überschreiten des Schwellwerts diese Relativbewegung ermöglicht werden.

Damit kann das Reibmittel beispielsweise als Elastomerring ausgebildet sein. Der wenigstens eine Elastomerring, insbesondere sämtliche Elastomerringe, des Führungsabschnitts können kraft- und/oder form- und/oder stoffschlüssig an dem Armlehnenteil, insbesondere an der Schlittenstruktur des Armlehnenteils, befestigt sein.

Die wenigstens zwei Tragstreben können beispielsweise an deren der Rotationsachse zugewandten bzw. zugeordneten Enden oder im Nahbereich von deren der Rotationsachse zugewandten Enden vermittels eines Querverbindungsmittels, insbesondere einer als Querstrebe ausgebildeten Querverbindungsmittels, verbunden sein. Das Querverbindungsmittel kann z. B. als metallisches Bauteil über eine kraft- und/oder stoff- und/oder formschlüssige Verbindung mit den Tragstreben verbunden sein. Bevorzugt wird ein Querverbindungsmittel mit den Tragstreben jeweils verschweißt bzw. angeschweißt. In einer zweckmäßigen und optionalen Ausführungsform sind die Querverbindungsmittel steif mit den wenigstens zwei Tragstreben verbunden, sodass sich durch die Querverbindungsstreben sich eine steife Verbindung der beiden Tragstreben zueinander ergibt. Insbesondere für eine Beaufschlagung der Armlehnenanordnung von einer seitlich einwirkenden bzw. senkrecht und in der Haupterstreckungsebene liegenden auf die Armlehnenanordnung einwirkenden Kraft kann eine steife Verbindung der Tragstreben vermittels wenigstens eines Querverbindungsmittels vorteilhaft sein.

In einer optionalen Ausführungsform kann es vorgesehen sein, dass die wenigstens zwei Tragstreben über ein Querverbindungsmittel, insbesondere eine Querstrebe, verbunden sind, wobei das Querverbindungsmittel von dem der Rotationsachse zugeordneten bzw. gewandten Ende der Tragstreben beabstandet ist. Bevorzugt weist der Abstand des Querverbindungsmittels zum dem der Rotationsachse zugewandten Enden der Tragstreben eine Länge von mindestens 20 %, bevorzugt von mindestens 27 %, besonders bevorzugt von mindestens 32 %, höchst bevorzugt von mindestens 35 %, der Gesamtlänge der Tragstrebe auf. Durch die Beabstandung des Querverbindungsmittels von dem der Rotationsachse zugewandten bzw. zugeordneten Ende der Tragstreben wird erreicht, dass sich eine einseitig auf die Tragstreben an deren freien Ende wirkende Kraft, insbesondere eine senkrecht zur Haupterstreckungsebene der Tragstruktur wirkende Kraft gleichmäßig auf die wenigstens zwei Tragstreben vermittels des Querverbindungsmittels verteilt.

Die wenigstens zwei Tragstreben können optional über ein Querverbindungsmittel, insbesondere eine Querstrebe, verbunden sein, wobei das Querverbindungsmittel von dem der Rotationsachse zugeordneten bzw. zugewandten Ende der Tragstreben beabstandet ist und der Abstand der Querstrebe zum dem der Rotationsachse zugeordneten Enden der Tragstreben eine Länge von maximal 90 %, bevorzugt von maximal 70 %, besonders bevorzugt von maximal 55 %, höchst bevorzugt von maximal 45 %, der Gesamtlänge der Tragstrebe aufweist. Dadurch, dass die Querstrebe derart von dem Freien Ende zurückgezogen ist, kann ein Freiraum geschaffen werden, welcher zur Aufnahme einer in die Ebene der Querstrebe der Tragstruktur angeordneten oder ausgebildeten Störgeometrie des Armlehnenteils dienen kann. Beispielsweise kann diese Störgeometrie als ein in oder an dem Armlehnenteil platzierter Aufnahmebehälter ausgebildet sein. Dadurch dass die Querstrebe maximal eine Länge von z. B. maximal 70 % der Gesamtlänge der Tragstrebe aufweist, können die verbleibenden 30 % zur Aufnahme des Aufnahmebehälters dienen.

Es ist möglich, dass die wenigstens zwei Tragstreben über ein erstes und über ein weiteres Querverbindungsmittel miteinander verbunden sind, wobei das erste Querverbindungsmittel im Nahbereich des der Rotationachse zugewandten Ende der Tragstreben und das weitere Querverbindungsmittel von dem der Rotationsachse zugewandten Ende der Tragstreben beabstandet ist. Durch die Verwendung von einer Mehrzahl an Querverbindungsmitteln, insbesondere Querverbindungsstreben, kann eine gesteigerte Versteifung der damit leiterartig ausgebildeten Tragstruktur und damit auch der gesamten Armlehnenanordnung erreicht werden.

Wenigstens eine Tragstrebe, insbesondere sämtliche Tragstreben, der Tragstruktur kann bzw. können beispielsweise als Hohlkörper ausgebildet sein. Insbesondere kann die wenigstens eine hohlkörperförmige Tragstrebe einen zumindest abschnittsweise, bevorzugt überwiegenden, besonders bevorzugt ausschließlich, konstanten Querschnitt aufweisen. Ein ausschließlich bzw. gänzlich konstanter Querschnitt der Tragstrebe meint hierbei eine gleichbleibende Querschnittsgeometrie, wobei vereinzelte Ausnehmungen und/oder Aussparungen zur Aufnahme von Elementen wie z. B. einer Querverbindungsstrebe, hierbei von dem hierin beschriebenen gänzlich konstanten Querschnitt nicht abweicht.

Die wenigstens eine Tragstrebe der Tragstruktur kann beispielsweise eine längliche Querschnittsform aufweisen, insbesondere verläuft die Längsachse der Querschnittsform der wenigstens einen Tragstrebe, insbesondere sämtlicher Tragstreben der Tragstruktur, im bestimmungsgemäßen Gebrauch der Armlehnenanordnung senkrecht zu einer Armauflagefläche des Armlehnenteils. Diese längliche Querschnittskonturform der Tragstrebe kann sich beispielsweise zumindest abschnittsweise, bevorzugt überwiegend, besonders bevorzugt gänzlich, über die Länge der Tragstrebe erstrecken. So kann die Tragstrebe eine längliche Querschnittsform aufweisen, welche eine über die überwiegende, bevorzugt über die gänzliche, Länge der Tragstrebe konstant ist. Durch eine derart geformte Tragstrebe lassen sich die im bestimmungsgemäßen Gebrauch der Tragstrebe typischen Kräfte mit einem geringen Maß an Volumen und Masse für die Tragstruktur, insbesondere in die Lagerungseinrichtung, ableiten. So kann z. B. während eines Abstützen eines Arms eines Fahrzeuginsassen auf die Auflagefläche des ausgeklappten Armlehnenteils mit einem minimalen Aufwand an Material und Bauraum hinreichend aufgenommen und zur Lagerungseinrichtung abgeleitet werden. Eine Ausrichtung senkrecht zur Armauflagefläche des Armlehnenteils kann auch als Ausrichtung senkrecht zur Haupterstreckungsebene der Armauflagefläche des Armlehnenteils verstanden werden.

Die Querschnittsform der wenigstens einen Tragstrebe, insbesondere sämtlicher Tragstreben einer Tragstruktur, kann beispielsweise ein Verhältnis von Länge zu Breite der Querschnittsform von maximal 4,0, bevorzugt von maximal 3,5 besonders bevorzugt von maximal 3,0, höchst bevorzugt von maximal 2,6, aufweisen. Die Querschnittsform der wenigstens einen Tragstrebe, insbesondere sämtlicher Tragstreben einer Tragstruktur, kann beispielsweise ein Verhältnis von Länge zu Breite von mindestens 1,25, bevorzugt von mindestens 1,60, besonders bevorzugt von mindestens 2,0, höchst bevorzugt von mindestens 2,4, aufweisen. Die angegebenen maximalen und minimalen Verhältnisse für die Länge zur Breite der Querschnittsform der Tragstruktur können in Kombination miteinander betrachtet werde, hierbei haben sich die angegebenen Werte für den Aufbau einer längsverschiebbaren Armlehne für den Fahrzeugfond als zweckmäßig herausgestellt.

Sofern die Tragstruktur der Armlehnenanordnung mehr ein Querverbindungsmittel, insbesondere mehr als eine Querverbindungsstrebe umfasst, kann es beispielsweise vorgesehen sein, dass die Rotationsachse in der Draufsicht auf die Tragstruktur innerhalb einer durch wenigstens zwei Querverbindungsmittel, welche Tragstreben der Tragstruktur miteinander verbinden, gebildeten Fläche angeordnet ist. Damit führen diese zwei Querverbindungsmittel, insbesondere Querverbindungsstreben, während der Rotation der Tragstruktur um die Rotationsachse eine Bewegung in unterschiedliche Richtungen, d. h. einmal nach oben und einmal nach unten, aus.

In einer optionalen Ausführungsform kann es vorgesehen sein, dass das Armlehnenteil eine wenigstens ein, insbesondere durch eine Vertiefung definiertes, Aufnahmeelement für einen Drittgegenstand umfassende Aufnahmeeinrichtung umfasst. Dieser Aufnahmeeinrichtung ist eine Deckeleinrichtung zugeordnet, welche ein bewegbar an dem Armlehnenteil gelagertes Deckelelement umfasst. Dabei ist das Deckelelement in einem rotatorischen Bewegungsfreiheitsgrad um eine Deckelrotationsachse in eine erste Stellung bzw. Geschlossenstellung, in welcher keine Zugangsmöglichkeit bzw. keine Zugriffsmöglichkeit in einen durch das wenigstens eine Aufnahmeelement definierten Aufnahmeraum gegeben ist, und in wenigstens eine weitere Stellung bzw. Offenstellung, in welcher eine Zugangsmöglichkeit in einen durch das wenigstens eine Aufnahmeelement definierten Aufnahmeraum gegeben ist, relativ zu dem Armlehnenteil an dem Armlehnenteil bewegbar gelagert. Beispielsweise kann vermittels eines drehbeweglich gelagerten Deckelelements abhängig von dessen Position bzw. Ausrichtung ein als Vertiefung ausgebildeter Aufnahmeraum eines Aufnahmeelements geschlossen (erste Stellung) und freigegeben (weitere Stellung) werden. Bevorzugt kann das Deckelelement eine Doppelfunktion innehaben, einerseits kann ein Aufnahmeraum oder zumindest ein Abschnitt eines Aufnahmeelements temporär verschlossen werden und als weitere Funktion kann das Deckelelement im aufgeklappten Zustand als vergrößerte Nutzfläche der Armlehnenanordnung verwendet werden. So kann das Deckelelement im aufgeklappten Zustand, also in der weiteren Stellung bzw. in der Offenstellung als erweiterter Flächenbereich bzw. Tischbereich der Armlehnenanordnung verwendet werden.

Unter einer Zugangs- bzw. Zugriffsmöglichkeit auf ein Aufnahmeelement für einen Drittgegenstand kann ein zumindest abschnittsweise, bevorzugt überwiegend oder gänzlich flächiges verschließen bzw. verdecken des Aufnahmeelements verstanden werden. So kann z. B. das Deckelelement in der ersten Stellung das Aufnahmeelement derart verdecken, dass ein Zugriff auf ein in dem Aufnahmeelement eingelegter Drittgegenstand nicht möglich ist. Beispielsweise kann der Drittgegenstand aufgrund seiner Geometrie im Lichte etwaiger durch die Ausgestaltung des Deckelelements noch freiliegenden Bereiche im Inneren des Aufnahmeelements gefangen bzw. nicht durch etwaige Öffnungsabschnitte herausführbar sein.

Bevorzugt kann die Drehachse bzw. die Deckelrotationsachse des Deckelelements am vorderen Endbereichs des Armlehnenteils, insbesondere am vorderen oberen Ende des Armlehnenteils, angeordnet oder ausgebildet sein. Durch eine derartige Anordnung des Deckelelements kann dieses auf einfache und effektive Weise zur Vergrößerung der Nutzfläche der Armlehnenanordnung eingesetzt werden.

Die Deckelrotationsachse des Deckelelements kann beispielsweise an der bzw. dem der Rotationsachse abgewandten Hälfte, bevorzugt Drittel, besonders bevorzugt Viertel, höchst bevorzugt Sechstel, weiter bevorzugt an dem der Rotationsachse abgewandten Ende, der Länge des Armlehnenteils angeordnet bzw. platziert sein. Dadurch, dass die Deckelrotationsachse an dem der Rotationsachse des Armlehnenteils abgewandten Längsseite des Armlehnenteils angeordnet ist, kann auf einfache und effektive Weise ein für eine erweiterte Nutzung der Armlehne attraktiver Bereich innerhalb eines Fahrzeugfonds für einen Fahrzeuginsassen nutzbar gemacht werden.

Die Deckelrotationsachse kann beispielsweise in der oberen Hälfte, bevorzugt im oberen Drittel, besonders bevorzugt im oberen Viertel, höchst bevorzugt im oberen Fünftel, der Höhe des Armlehnenteils angeordnet oder ausgebildet sein. Dadurch, dass die Deckelrotationsachse in einem relativ oberen Bereich der Höhe eines ausgeklappten Armlehnenteils bzw. eines sich im bestimmungsgemäßen Armauflagepositionszustand befindlichen Armlehnenteils angeordnet ist, wird der Vorteil erreicht, dass eine manuelle Bedienung bzw. manuelle Bewegung des Deckelelements vereinfacht ausgeführt werden kann. Dies ist vorteilhaft, da das Deckelelement und die Rotationsbewegung des Deckelelements aufgrund der Position der Deckelrotationsachse für eine neben der Armlehnenanordnung sitzenden Person einfach erreichbar und die Rotationsbewegung einfach ausführbar ist.

Das in die wenigstens eine weitere Stellung (Offenstellung) bewegte Deckelelement kann beispielsweise um einen Winkel α, insbesondere um einen Winkel α innerhalb des Bereichs zwischen 90° und 270°, bevorzugt zwischen 90° und 180°, relativ zu der ersten Stellung verschwenkt werden oder verschwenkbar sein. Insbesondere hat sich eine Verwenkbarkeit im Bereich eines Winkels α von 160° bis 200°, bevorzugt 170° bis 190°, höchst bevorzugt 175° bis 185°, als zweckmäßig herausgestellt. Durch die angegebenen Winkelbewegungen kann vermittels dem Deckelelement sowohl ein einfaches Verschließen des Aufnahmeelements als auch eine effektive Erweiterung der Nutzfläche der Armlehnenanordnung erreicht werden. Es kann optional vorgesehen sein, dass das Deckelement in den Endlagen und/oder in zwischen den Endlagen befindlichen Zwischenlagen bzw. Zwischenwinkelpositionen verrastend in der jeweiligen Winkelposition verharren kann. Mit anderen Worten kann vermittels eines Klemm- und/oder Rastmechanismus vordefinierte oder frei wählbare Winkelpositionen des Deckelelements relativ zu dem Armlehnenteils gehalten werden. Die vermittels des Klemm- und/oder Rastmechanismus gehaltenen Winkelpositionen können durch Nutzung eines Sperr- und Freigabemechanismus oder durch Überwinden vordefinierter Kraftschwellwerte für die zur bewegungsausführenden Kraft aus einer ersten Winkelposition zu einer weiteren Winkelposition verändert werden. Ein Rastmechanismus kann hierbei beispielsweise vermittels einer, insbesondere federvorgespannten, Kolben-Zylinder-Einheit ausgeführt sein.

Das Deckelelement kann beispielsweise ausgehend von der ersten Stellung zu einer Ablagestellung eine Drehbewegung von mindestens 90°, bevorzugt von mindestens 135°, besonders bevorzugt von mindestens um 160°, höchst bevorzugt von mindestens 175°, weiter bevorzugt von mindestens 180°, ausführen oder eine solche minimale Drehbewegung ausführbar sein. Durch diese Mindestwinkelwerte wird eine entsprechend weitreichende Bewegung des Deckelelements erreicht, sodass eine entsprechend große Veränderung eines Zugriffsfreiraums zu einem als Ausnehmung ausgebildeten Aufnahmeelements und/oder eine entsprechend große Veränderung der durch das Deckelelement ermöglichten Erweiterung der Nutzfläche der Armlehnenanordnung ermöglicht wird.

Das Deckelelement kann beispielsweise ausgehend von der ersten Stellung zu einer Ablagestellung eine Drehbewegung von maximal 270°, bevorzugt von maximal 210°, besonders bevorzugt von maximal 195°, höchst bevorzugt von maximal 185°, weiter bevorzugt von maximal 180°, ausführen oder eine solche maximale Drehbewegung ausführbar sein. Die Ablagestellung kann hierbei eine Endlage des Deckelelements bilden. Auch kann die Ablagestellung eine im bestimmungsgemäßen Betrieb der Armlehnenanordnung im ausgeklappten Zustand des Armlehnenteils vorgehaltene Position der maximalen Erweiterung einer Auflagefläche des Armlehnenteils durch einen zumindest im Wesentlichen oder exakt in einer gemeinsamen Ebene liegenden Flächenabschnitt des Deckelelements ausbilden. Mit anderen Worten kann die Ablagestellung beispielsweise eine Ausrichtung des Deckelelements darstellen, in welcher das Deckelelement gemeinsam mit der Auflagefläche des Armlehnenteils in einer gemeinsamen Ebene sich erstrecken, sodass durch das Deckelelement die ebene Fläche des Armlehnenteils als, insbesondere ebenso ebene, Fläche erweitert wird.

Das Deckelelement kann beispielsweise eine maximale Höhe von maximal der Hälfte, bevorzugt von maximal dem Drittel, besonders bevorzugt von maximal dem Viertel, höchst bevorzugt von maximal dem Fünftel, der maximalen Höhe des Armlehnenteils aufweisen. Hierbei kann beispielsweise auf die maximale Höhe des Armlehnenteils im Bereich des Deckelelements, im geschlossenen Zustand des Deckelelements (erste Stellung) abgestellt werden. Das Deckelelement kann z. B. eine maximale Höhe aufweisen, welche maximal der Höhe, bevorzugt maximal 80 % der Höhe, besonders bevorzugt maximal 70 % der Höhe, höchst bevorzugt maximal 65 % der Höhe, der Tragstrebe entspricht. Alternativ oder zusätzlich kann das Deckelelement eine maximale Höhe aufweisen, welche mindestens 20 % der Höhe, bevorzugt mindestens 40 % der Höhe, besonders bevorzugt mindestens 50 % der Höhe, höchst bevorzugt mindestens 55 % der Höhe, der Tragstrebe entspricht. Mit derartigen Mindest- und/oder Maximalwerten für die Höhe des Deckelelements kann eine in Richtung der Vertikalachse bzw. in der Höhe kleinbauende Armlehnenanordnung vorteilhaft erreicht werden, da das Deckelelement oberhalb der Tragstrebe angeordnet werden kann. In diesem Fall bestimmen die addierten Höhen von Tragstruktur, insbesondere von Tragstrebe, und Deckelelement einen wesentlichen Höhenbestandteil des Armlehnenteils.

Das Deckelelement kann beispielsweise im Bereich der Deckelrotationsachse eine erste Höhe und an dem der Deckelrotationsachse beabstandeten Ende eine zweite Höhe aufweisen, wobei die zweite Höhe kleiner als die erste Höhe ist. Bevorzugt entspricht die zweite Höhe maximal 90 % ersten Höhe, besonders bevorzugt entspricht die zweite Höhe maximal 80 % der ersten Höhe, höchst bevorzugt entspricht die zweite Höhe maximal 75 % der ersten Höhe. Damit kann das Deckelelement von der Seitenansicht aus betrachtet eine keilförmige Grundform aufweisen. Damit kann das Deckelelement leichter ausgebildet werden, da im Bereich der Scharniere, welcher höheren Belastungen ausgesetzt ist, mehr Material als in den von den Scharnieren abgelegenen Bereichen vorgehalten wird. Das Deckelelement kann beispielsweise aus Metall oder aus Kunststoff ausgebildet sein. Z. B. ist das Deckelelement als Blechbauteil ausgebildet, insbesondere können wenigstens ein Randbereich, bevorzugt zumindest die drei freien Randbereiche, einen umgebogenen Abschnitt, z. B. einen Stehfalz, aufweisen.

Es ist möglich, dass eine Sicherungseinrichtung, welche das in einer Bewegungs- bzw. Schwenkrichtung in die wenigstens eine weitere Stellung bewegte bzw. verschwenkte Deckelelement in der wenigstens einen Stellung gegen ein weiteres Bewegen bzw. Verschwenken in der Bewegungs- bzw. Schwenkrichtung sichert. Die Sicherungseinrichtung kann beispielsweise eingerichtet sein, Bewegungen des in die wenigstens eine weitere Stellung bewegten bzw. verschwenkten Deckelelements in der Bewegungs- bzw. Schwenkrichtung bis zu einem Maximalkraft- oder Maximaldrehmomentgrenzwert zu sperren. Alternativ oder zusätzlich kann die Sicherungseinrichtung eingerichtet sein, Bewegungen des in die wenigstens eine weitere Stellung bewegten bzw. verschwenkten Deckelelements in der Bewegungs- bzw. Schwenkrichtung bei einer/einem oberhalb des Maximalkraft- oder Maximaldrehmomentgrenzwerts an dem Deckelteil anliegenden Kraft oder Drehmoment, ein weiteres Bewegen bzw. Verschwenken des Deckelelements in der Bewegungs- bzw. Schwenkrichtung ohne Beschädigung oder Zerstörung der Deckeleinrichtung freizugeben. Hierzu kann ein Auslösemechanismus eingesetzt werden, der ein zerstörnungsfreies Trennen des Deckelelements von dem restlichen Armlehnenteil ermöglicht. Die Sicherungseinrichtung kann beispielsweise eingerichtet sein, bei einer/einem oberhalb des Maximalkraft- oder Maximaldrehmomentgrenzwerts an dem Deckelelement anliegenden Kraft oder Drehmoment die Lagerung des Deckelelements an dem Armlehnenteil zu lösen, insbesondere derart, dass eine vorherige Befestigung des Deckelelements an dem Armlehnenteil, insbesondere zerstörungsfrei, getrennt ist oder trennbar ist.

Es ist möglich, dass das Deckelelement über einen Scharnierabschnitt mit dem Armlehnenteil drehbeweglich verbunden ist, wobei in einem vollständig aufgeklappten Zustand des Deckelelement, in einer Schnittebene senkrecht zur Deckelrotationsachse des Scharnierabschnitts das Deckelelement an wenigstens zwei Kontaktabschnitten an einer armlehnenteilseitigen Lagerungsstruktur anliegt bzw. in Kontakt steht. Hierbei kann es optional vorgesehen sein, dass ein erster Kontaktabschnitt und ein weiterer Kontaktabschnitt bezogen auf die Deckelrotationsachse einen Winkel ζ von mindestens 25°, bevorzugt von mindestens 45°, besonders bevorzugt von mindestens 90°, höchst bevorzugt von mindestens 110°, weiter bevorzugt von mindestens 120°, zueinander einschließen. In Kombination mit den erwähnten Mindestwerten oder unabhängig hiervon kann ein erster Kontaktabschnitt und ein weiterer Kontaktabschnitt bezogen auf die Deckelrotationsachse einen Winkel ζ von maximal 180°, bevorzugt von maximal 165°, besonders bevorzugt von maximal 145°, höchst bevorzugt von maximal 135°, weiter bevorzugt von maximal 130°, zueinander einschließen. Durch die Ausgestaltung der Kontaktabschnitte von Deckelelement und armlehnenteilseitiger Lagerungsstruktur gemäß der obigen Winkelober- und untergrenzen kann eine hohe Lasten ableitende und einfach aufgebaute Endlagenbegrenzung erreicht werden.

Die Deckeleinrichtung kann beispielsweise an dem oder im Bereich eines freien Endes des Armlehnenteils an diesem angeordnet (insbesondere gelagert) sein, wobei das in die wenigstens eine weitere Stellung bewegte Deckelelement eine Verlängerung des Armlehnenteils über einen Grundkörper des Armlehnenteils hinaus bildet. Hierbei kann insbesondere eine Verlängerung des Armlehnenteils im oberen Bereich bzw. nahe der Armauflagefläche oder auf Höhe der Armauflagefläche vorgesehen sein. Folglich kann hiermit eine Verlängerung des Armlehnenteils in der Ebene der als Armlehne dienen Armauflagefläche des Armlehnenteils erreicht werden. Durch das Aufklappen bzw. das Bewegen des Deckelelements kann die obere Oberfläche bzw. die obere Begrenzungsebene eine temporäre Verlängerung erfahren.

Die Erfindung ist anhand von Ausführungsbeispielen in den Zeichnungen näher erläutert. Dabei zeigt:
- Fig. 1: eine perspektivische Prinzipdarstellung einer Armlehnenanordnung gemäß einem Ausführungsbeispiel;
- Fig. 2: eine perspektivische Prinzipdarstellung einer Armlehnenanordnung in einem das Deckelelement aufgeklappten Zustand gemäß einem Ausführungsbeispiel;
- Fig. 3: eine perspektivische schematische Explosionsdarstellung einer Armlehnenanordnung gemäß einem Ausführungsbeispiel;

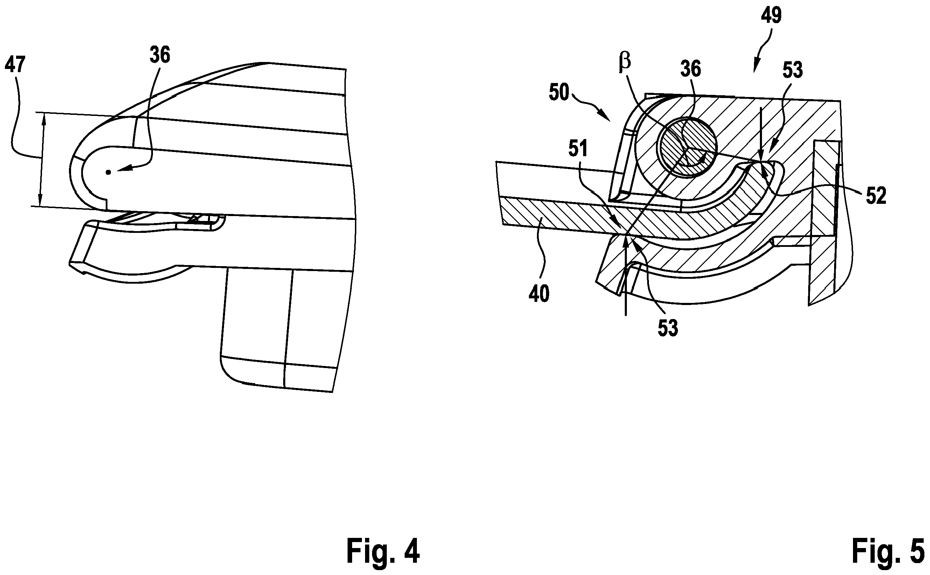

- Fig. 4: eine schematische Detaildarstellung des vorderen Endes der Armlehnenanordnung im Bereich der Deckelrotationsachse;
- Fig. 5: eine schematische Schnittdarstellung eines Details des vorderen Endes der Armlehnenanordnung im Bereich der Deckelrotationsachse gemäß Schnitthinweis V-V aus Figur 2;

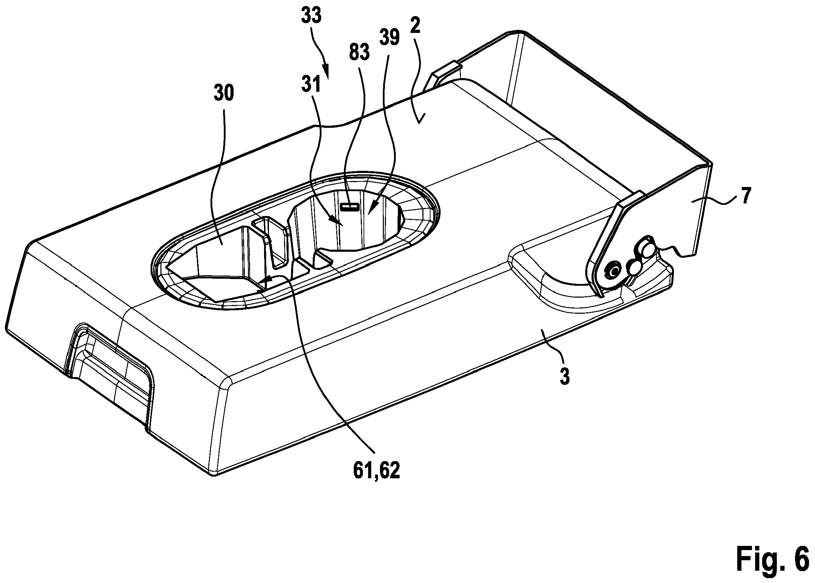

- Fig. 6: eine perspektivische Prinzipdarstellung einer Amrlehnenanordnung mit einer alternativen Ausrichtung einer an dieser angeordneten Aufnahmeeinrichtung;
- Fig. 7: eine schematische Draufsicht auf eine Aufnahmeeinrichtung gemäß einer Ausführungsform;
- Fig. 8: eine perspektivische Prinzipdarstellung auf eine Aufnahmeeinrichtung gemäß der Figur 7;
- Fig. 9: eine schematische Draufsicht auf eine mit einem Drittgegenstand bestückte Aufnahmeeinrichtung gemäß Figur 7;
- Fig. 10: eine schematische Längsschnittdarstellung einer mit einem Drittgegenstand bestückte Aufnahmeeinrichtung gemäß Figur 7;
- Fig. 11: eine perspektivische Prinzipdarstellung des der Rotationsachse zugewandten Ende der Tragstruktur und dessen Anbindung an einen Halter.

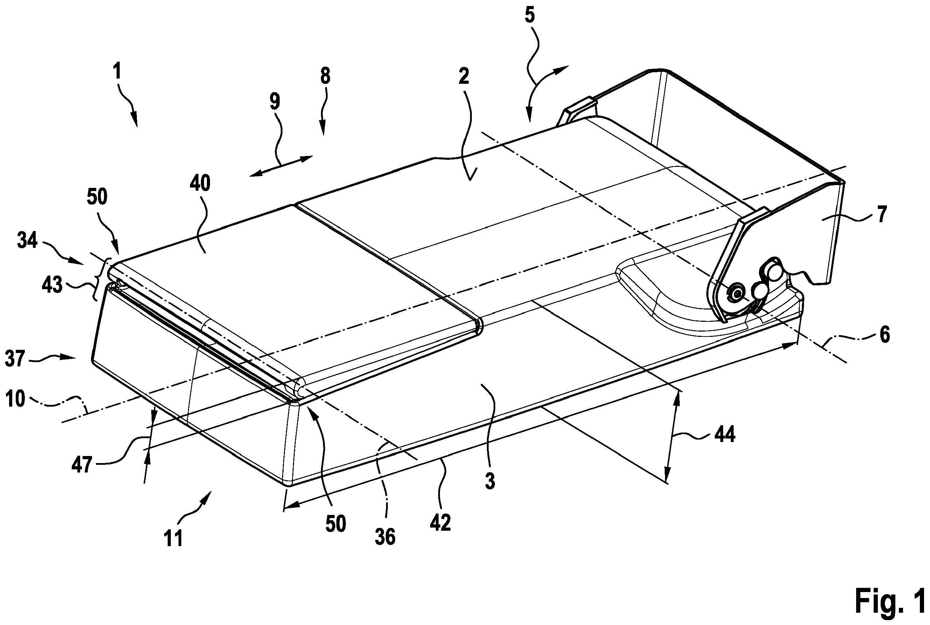

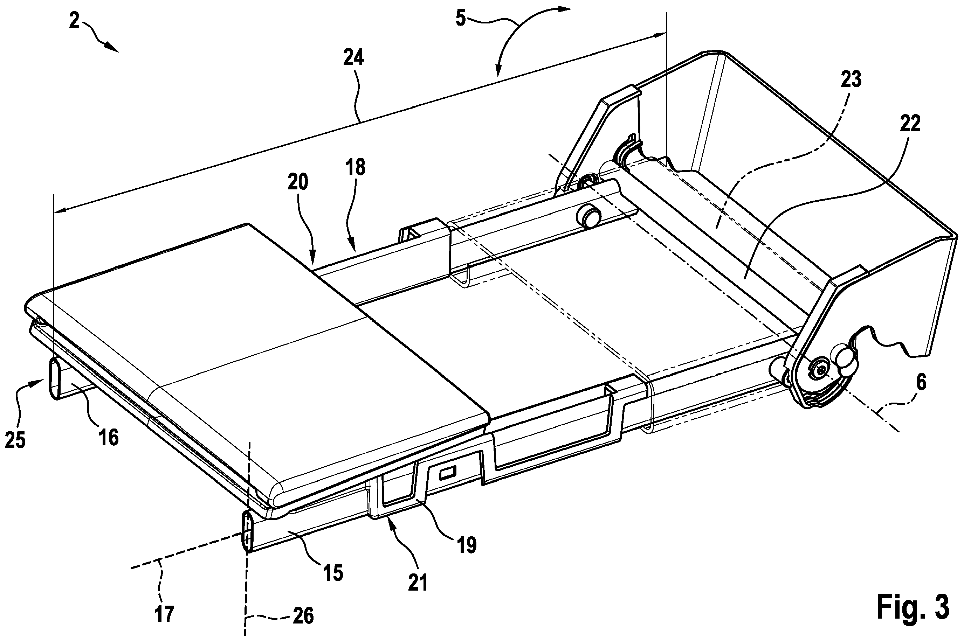

Figur 1 zeigt eine Armlehnenanordnung 1 zum Verbau in einem Fond eines Kraftfahrzeugs (nicht dargestellt), umfassend eine zur Lagerung eines eine Armauflagefläche 2 umfassenden Armlehnenteils 3 eingerichtete Tragstruktur 4, vgl. Figur 3. Die Tragstruktur 4 ist in einem rotatorischen Bewegungsfreiheitsgrad 5 um eine Rotationsachse 6 in eine erste Stellung (hochgeklappte Stellung der Armlehne, beispielsweise ist dabei die Armlehne in einer Ausnehmung einer Rückenlehnenstruktur, insbesondere bündig, aufgenommen) und in wenigstens eine weitere Stellung 8 bewegbar gelagert, hierbei kann die erste Stellung ein Hochklappen der Tragstruktur 4 und damit auch des Armlehnenteils 3 und die weitere Stellung 8 eine ausgeklappte Position und/oder Ausrichtung des der Tragstruktur und des Armlehnenteils 3 umfassen. Damit kann in der weiteren Stellung 8, vgl. Figur 1, die Armauflagefläche 2 des Armlehnenteils 3 eine im Wesentlichen horizontale Ausrichtung einnehmen, sodass diese zum Auflegen eines Arms einer neben der Armlehnenanordnung 1 sitzenden Person geeignet ist. Ferner umfasst die Armlehnenanordnung 1 ein eine Armauflagefläche 2 umfassendes Armlehnenteil 3, wobei das Armlehnenteil 3 in einem translatorischen Bewegungsfreiheitsgrad 9 entlang einer Translationsachse 10 in eine erste Translationsstellung 11 und in wenigstens eine weitere Translationsstellung 12 relativ zu der Tragstruktur 4 auf oder an der Tragstruktur 4 bewegbar gelagert ist. In der ersten Translationsstellung 11 ist stellt das Armlehnenteil 3 und die Tragstruktur 4 eine zusammengeschobene Bauteilstruktur dar bzw. nimmt ein kompaktes Volumen ein, vgl. Figur 1.

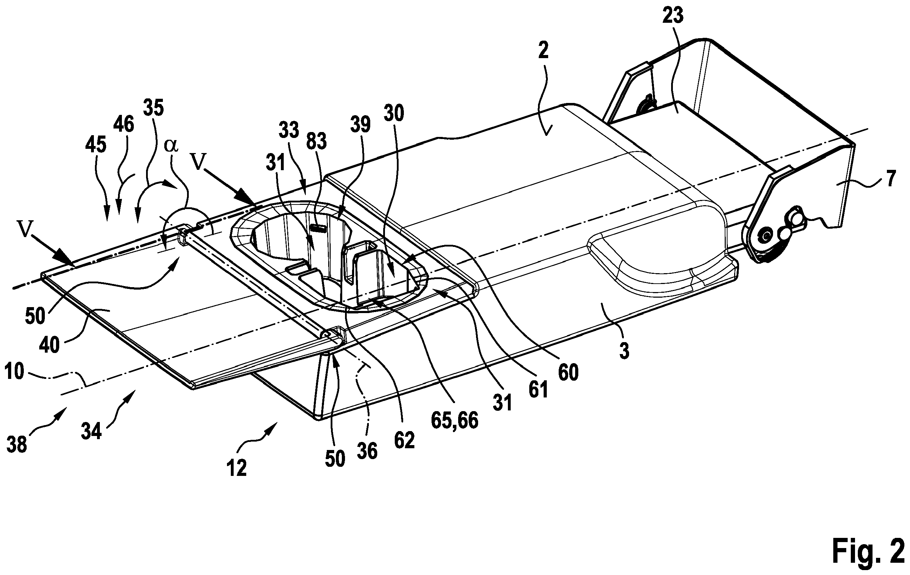

Figur 2 zeigt das Armlehnenteil 3 und die Tragstruktur 4 in einer auseinandergeschobenen bzw. einem auseinandergezogenen Zustand. Die Tragstruktur 4 kann mit einer Blende 23 versehen sein, welche den sich bildenden Freiraum der Tragstruktur 4 durch das Wegbewegen des Armlehnenteils 3 abdeckt. Durch die Längsbewegbarkeit des Armlehnenteils 3 kann die Länge der Armlehne bzw. der Armlehnenanordnung 1 auf den Wunsch des die Armlehnenanordnung 1 nutzenden Fahrzeuginsassen angepasst werden.

Das Armlehnenteil 3 kann beispielsweise zwischen einem eine erste Stellung 11 definierenden ersten Anschlagelement und wenigstens einem eine weitere Stellung 12 definierenden zweiten Anschlagelement an oder auf der Tragstruktur 4 bewegbar gelagert sein. Durch die Anschlagelemente wird die relative Längsbewegbarkeit von Armlehnenteil 3 und Tragstruktur 4 begrenzt. Die Begrenzung eines Zusammenschiebens bzw. der Bewegung hin zu der ersten Stellung 11 kann durch das stirnseitige Material des Armlehnenteils 3 erfolgen, da dieses die Tragstruktur 4 nach vorne abschließt und damit ein Anschlagelement ausbildet. Alternativ oder zusätzlich kann das Anschlagelement am rotationsachsenseitigen Ende des Armlehnenteils 3 in Kontakt mit der Tragstruktur 4 selbst oder mit einem bzgl. der Translationsachse 10 steif mit der Tragstruktur 4 verbundenen Element, z. B. dem Halter 7 einer Haltestruktur des Armlehnenteils 3, treten.

Die Tragstruktur 4 kann beispielsweise aus wenigstens zwei beabstandet zueinander angeordneten, insbesondere parallel zueinander angeordneten, Tragstreben 15, 16 ausgebildet sein, vgl. Figur 3. In oder auf diesen Tragstreben 15, 16 ist hierbei Armlehnenteil 3 entlang einer Längsachse 17 der Tragstreben 15, 16 bewegbar gelagert. Dabei kann das Armlehnenteil 3 eine Schlittenstruktur 18 mit wenigstens zwei Führungsabschnitten 19, 20 umfassen, wobei ein erster Führungsabschnitt 19 der Schlittenstruktur 18 an einer ersten Tragstrebe 15 und ein weiterer Führungsabschnitt 20 der Schlittenstruktur 18 an einer weiteren Tragstrebe 16 jeweils linear beweglich gelagert ist. Die beiden Tragstreben 15, 16 sind im Bereich der äußeren Querenden des Armlehnenteils 3 angeordnet oder ausgebildet und bilden damit eine versteifende Struktur entlang der Längsbegrenzung des Armlehnenteils 3.

Die Schlittenstruktur 18 kann beispielsweise über an den Führungsabschnitten 19, 20 angeordnete oder ausgebildete Reibmittel 21 mit den Tragstreben 15, 16 beweglich gelagert sein. Die Reibmittel 21 können separate Elemente oder einstückig mit den schlittenstrukturseitigen Führungsabschnitten 19, 20 ausgebildet sein. Die Reibmittel 21 bilden eine Widerstandseinrichtung bezüglich einer Relativbewegung der Schlittenstruktur 18 mit den Tragstreben 15, 16 und damit einen zu überbrückenden bzw. überdrückenden Kraftschwellwert, welcher überdrückt werden muss, bevor es zu einer Relativbewegung kommt. Mit anderen Worten soll vermittels der Reibmittel 21 eine unbeabsichtigte Bewegung des Armlehnenteils 3 relativ zu der Tragstruktur 4 verhindert werden. Wenigstens ein Reibmittel 21, insbesondere sämtliche Reibmittel 21 einer Schlittenstruktur 18 können beispielsweise als Elastomerring(e) ausgebildet sein bzw. sind als solche ausgebildet. Elastomerringe können in einer, insbesondere korrespondierenden, Aufnahmestruktur im Bereich der Führungsabschnitte 19, 20 form- und/oder kraft- und/oder stoffschlüssig befestigt sein.

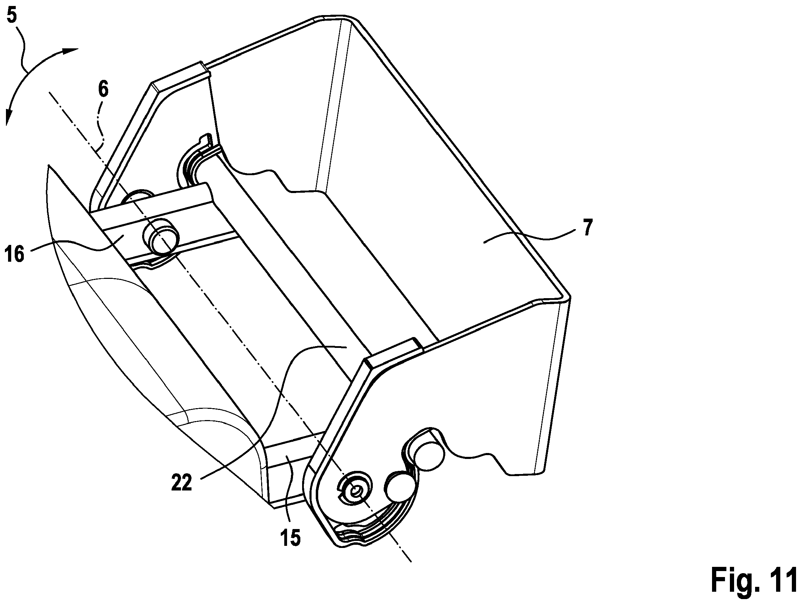

Die wenigstens zwei Tragstreben 15, 16 können beispielsweise an deren der Rotationsachse 6 zugeordneten Enden oder im Nahbereich von deren der Rotationsachse 6 zugeordneten Enden vermittels eines Querverbindungsmittels 22, insbesondere einer als Querstrebe ausgebildeten Querverbindungsmittels 22, verbunden sein, vgl. Figur 11. Das Querverbindungsmittel 22 kann eine steife Verbindung der Tragstreben 15, 16 ausbilden, sodass keine Relativbewegung der ersten Tragstrebe 15 zur weiteren Tragstrebe 16 aufgrund des Querverbindungsmittels 22 ermöglicht wird. Hierzu kann das Querverbindungsmittel 22 beispielsweise als metallischer Körper ausgebildet und kraft- und/oder form- und/oder stoffschlüssig an den Tragstreben 15, 16 befestigt sein. Beispielsweise ist das Querverbindungsmittel 22 an den Tragstreben 15, 16 angeschweißt.

Die wenigstens zwei Tragstreben 15, 16 können beispielsweise über ein Querverbindungsmittel 22, insbesondere eine Querstrebe, verbunden sein, wobei das Querverbindungsmittel 22 von dem der Rotationsachse 6 zugeordneten Ende der Tragstreben 15, 16 beabstandet ist. Hierbei kann der Abstand des Querverbindungsmittels 22 zum dem der Rotationsachse 6 zugeordneten Enden der Tragstreben 15, 16 eine Länge von mindestens 20 %, bevorzugt von mindestens 27 %, besonders bevorzugt von mindestens 32 %, höchst bevorzugt von mindestens 35 %, der Gesamtlänge 24 wenigstens einer, insbesondere sämtlicher, Tragstreben 15, 16 aufweisen. Dabei kann das Querverbindungsmittels 22 mit diesen (vorgenannten) Mindestabständen zu den Enden der Tragstreben 15, 16 beispielsweise ein zusätzliches Querverbindungsmittel 22 zu dem an dem Ende oder im Nahbereich der zur Rotationsachse 6 weisenden Enden der Tragstreben 15, 16 ausgebildeten Querverbindungsmittel 22 ausbilden.

Die wenigstens zwei Tragstreben 15, 16 können optional über ein Querverbindungsmittel 22, insbesondere eine Querstrebe, verbunden sein, wobei das Querverbindungsmittel 22 von dem der Rotationsachse 6 zugeordneten Ende der Tragstreben 15, 16 beabstandet ist (nicht dargestellt) und der Abstand des Querverbindungsmittels 22 zu dem der Rotationsachse 6 zugeordneten Enden der Tragstreben 15, 16 eine Länge von maximal 90 %, bevorzugt von maximal 70 %, besonders bevorzugt von maximal 55 %, höchst bevorzugt von maximal 45 %, der Gesamtlänge 24 der Tragstrebe 15, 16 aufweist. Auch dieses Querverbindungsmittel 22 mit den vorgenannten Maximalabständen zu den der Rotationsachse 6 zugeordneten Enden der Tragstreben 15, 16 kann beispielsweise ein zusätzliches Querverbindungsmittel 22 zu dem Querverbindungsmittel 22 darstellen, welches an dem Ende oder im Nahbereich der zur Rotationsachse 6 zugeordneten Enden der Tragstreben 15, 16 ausgebildet ist.

Die wenigstens zwei Tragstreben 15, 16 können beispielsweise über ein erstes und über ein weiteres Querverbindungsmittel 22 miteinander verbunden sein, wobei das erste Querverbindungsmittel im Nahbereich des der Rotationachse 6 zugewandten Ende der Tragstreben 15, 16 und das weitere Querverbindungsmittel von dem der Rotationsachse 6 zugewandten Ende der Tragstreben 15, 16 beabstandet ist. Durch das Vorsehen von mehr als zwei Querverbindungsmitteln 22 kann ein leiterartiger Aufbau der Tragstruktur 4 ermöglicht werden und schließlich die Steifigkeit, insbesondere die Verwindungssteifigkeit, der Tragstruktur erhöht werden.

Wenigstens eine Tragstrebe 15, 16, insbesondere sämtliche Tragstreben 15, 16, kann bzw. können als Hohlkörper ausgebildet sein. Optional kann wenigstens eine Tragstrebe 15, 16, insbesondere sämtliche Tragstreben 15, 16 der Tragstruktur 4 als, insbesondere metallisches, Strangpressprofil ausgebildet sein. Die wenigstens eine Tragstrebe 15, 16 der Tragstruktur 4 kann beispielsweise eine längliche Querschnittsform 25 aufweisen, insbesondere verläuft die Längsachse 26 der Querschnittsform 25 der wenigstens einen Tragstrebe 15, 16, insbesondere sämtlicher Tragstreben 15, 16 der Tragstruktur 4, im bestimmungsgemäßen Gebrauch der Armlehnenanordnung 1 senkrecht zu einer Armauflagefläche 2 des Armlehnenteils 3. Zwar ist in Figur 3 die gepolsterte Auflagefläche 2 nicht dargestellt, jedoch verläuft diese im Wesentlichen parallel zu der in der Figur 3 sichtbaren Oberfläche des geschlossenen Deckelelements 40.

Die Rotationsachse 6 kann beispielsweise derart angeordnet oder ausgebildet sein, dass diese in der Draufsicht auf die Tragstruktur 4 aus betrachtet, innerhalb einer durch wenigstens zwei Querverbindungsmittel 22, welche Tragstreben 15, 16 der Tragstruktur 4 miteinander verbindenden, gebildeten Fläche angeordnet ist. Mit anderen Worten verläuft die Rotationsachse 6 in der Draufsicht zwischen zwei Querverbindungsmitteln 22 der Tragstruktur 4. Zur Ausführung rotatorischen Bewegung 5 des Armlehnenteils 3 bzw. der Tragstruktur 4 kann die Tragstruktur 4 über Achsstummel an einem Halter 7 einer Halterstruktur drehbar gelagert sein, vgl. Figur 11.

Das Armlehnenteil 3 kann beispielsweise eine wenigstens ein, insbesondere durch eine Vertiefung 30 definiertes, Aufnahmeelement 31 für einen Drittgegenstand 32 umfassende Aufnahmeeinrichtung 33 umfassen. Der Aufnahmeeinrichtung 33 ist eine Deckeleinrichtung 34 zugeordnet, welche ein in einem rotatorischen Bewegungsfreiheitsgrad 35 um eine Deckelrotationsachse 36 in eine erste Stellung 37, in welcher keine Zugangsmöglichkeit in einen durch das wenigstens eine Aufnahmeelement 31 definierten Aufnahmeraum 39 gegeben ist, und in wenigstens eine weitere Stellung 38, in welcher eine Zugangsmöglichkeit in einen durch das wenigstens eine Aufnahmeelement 31 definierten Aufnahmeraum 39 gegeben ist, relativ zu dem Armlehnenteil 3 an dem Armlehnenteil 3 bewegbar gelagertes Deckelelement 40 umfasst.

Die Deckelrotationsachse 36 des Deckelelements 40 kann, insbesondere ausschließlich, an der bzw. dem der Rotationsachse 6 abgewandten Hälfte, bevorzugt Drittel 41, besonders bevorzugt Viertel, höchst bevorzugt Sechstel, weiter bevorzugt an dem der Rotationsachse 6 abgewandten Ende, der Länge 42 des Armlehnenteils 3 angeordnet sein. Optional oder zusätzlich kann die Deckelrotationsachse 36, insbesondere ausschließlich, in der oberen Hälfte, bevorzugt im oberen Drittel 43, besonders bevorzugt im oberen Viertel, höchst bevorzugt im oberen Fünftel, der Höhe 44 des Armlehnenteils 3 angeordnet oder ausgebildet sein. Mit anderen Worten kann die Deckelrotationsachse 36 an einem vorderen und oberen Ende des Armlehnenteils 3 angeordnet sein, so dass bei einem Aufschwenken des Deckelelements 40 dieses nach vorne bewegt wird und nach einer 180° Bewegung eine Verlängerung des Armlehnenteils 3 ausbildet. Das vordere Ende des Armlehnenteils 3 ist hierbei das Ende des Armlehnenteils, welches von der Rotationsachse 6 zur Ausführung der rotatorischen Bewegung 5 des Armlehnenteils 3 abgewandt ist. Mit anderen Worten bildet das freie Ende das freiliegende Ende einer andernends einseitig, beweglich oder unbeweglich, an einer Sitz- und/oder Rückenlehnenstruktur bzw. einem Halter 7 befestigten bzw. gelagerten Armlehnenteils 3. Der obere Bereich ist der im bestimmungsgemäßen Gebrauchszustand des Armlehnenteils 3 als Armlehne nach oben gerichtete bzw. weisende Bereich des Armlehnenteils 3, also der der Armlehnenauflagefläche 2 zugewandte Bereich des Armlehnenteils 3.

Das in die wenigstens eine weitere Stellung 38 bewegte Deckelelement 40 kann beispielsweise um einen Winkel α, insbesondere aus einem Bereich zwischen 90° und 270°, bevorzugt zwischen 90° und 180°, relativ zu der ersten Stellung 37 verschwenkt werden oder verschwenkbar sein. In der Zusammenschau der Figuren 1 und 2 ist das Deckelelement 40 ausgehend von seiner ersten, geschlossenen Stellung 37 (Fig. 1) hin zu seiner weiteren, geöffneten Stellung 38 um 180° (Winkel α) um die Deckelrotationsachse 36 aufgeschwenkt bzw. verdreht. Es ist möglich, dass der Winkel α für die das Armlehnenteils 3 maximal in der Draufsicht erweiternde Stellung ausgehend von der ersten, den Aufnahmeraum 39, insbesondere maximal, verschließende Stellung 37 zwischen 160° bis 200°, bevorzugt zwischen 170° und 190°, besonders bevorzugt 180°, beträgt.

Das Deckelelement 40 kann beispielsweise ausgehend von der ersten Stellung 38 zu einer Ablagestellung 45 eine Drehbewegung 46 von mindestens 90°, bevorzugt von mindestens 135°, besonders bevorzugt von mindestens um 160°, höchst bevorzugt von mindestens 175°, weiter bevorzugt von mindestens 180°, ausführen oder eine solche minimale Drehbewegung 46 ausführbar sein. Die Ablagestellung 45 ist in Figur 2 als die maximal geöffnete Stellung des Deckelelements 40 dargestellt. Die Ablagestellung 45 kann alternativ oder zusätzlich Zwischenstellungen des Deckelelements 40 zwischen der ersten, insbesondere maximal, geschlossenen Stellung 37 und der weiteren, insbesondere maximal, geöffneten Stellung 38, betreffen. So kann z. B. das Deckelelement 40 ausgehend von der ersten Stellung 37 aus Figur 1 in eine Ablagestellung 45 gelangen durch eine Drehbewegung 46 um einen Winkel α von 100° bis 170°, bevorzugt 120° bis 160°. In einer derartigen Ablagestellung 45 kann ein Drittgegenstand 32 auf das Deckelelement 40 in einer zur Armlehnenauflagefläche 2 schrägen Ausrichtung abgelegt werden. Dies kann zweckmäßig sein, wenn eine neben der Armlehnenanordnung befindliche, insbesondere sitzende, Person auf ein als Tablett ausgebildeten Drittgegenstand 32, der in der Ablagestellung 45 des Armlehnenteils 40 abgelegt ist komfortabel bedienen bzw. nutzen möchte.

Das Deckelelement 40 kann beispielsweise ausgehend von der ersten Stellung 38 zu einer Ablagestellung 45 eine Drehbewegung 46 um den Winkel α von maximal 270°, bevorzugt von maximal 210°, besonders bevorzugt von maximal 195°, höchst bevorzugt von maximal 185°, weiter bevorzugt von maximal 180°, ausführen oder eine solche maximale Drehbewegung ausführbar sein.

Das Deckelelement 40 kann eine maximale Höhe 47 von maximal der Hälfte, bevorzugt von maximal dem Drittel, besonders bevorzugt von maximal dem Viertel, höchst bevorzugt von maximal dem Fünftel, der maximalen Höhe 44 des Armlehnenteils 3 aufweisen. Damit kann das Deckelelement 40 einen im Vergleich zu dem Armlehnenteil 3 schmales Bauteil ausbilden, sodass lediglich eine geringe Masse bzw. ein geringes Volumen für die Drehbewegung 46 des Deckelelement 40 bewegt wird. Ferner kann durch die entsprechend schmale Ausgestaltung des Deckelelements 40 die Beeinträchtigung der Grundgeometrie des Armlehnenteils 3 minimal beeinflusst werden. So ist beispielsweise am freien Ende befindliche Stirnfläche des Armlehnenteils 3 weitestgehend unbeeinträchtigt durch die Geometrie des Deckelelement 40 und/oder durch die maßgeblich durch die Deckelrotationsachse 36 vorgegebene Bewegungsbahn des Deckelelements 40.

Eine Sicherungseinrichtung 49 kann vorgesehen sein, das in einer Bewegungs- bzw. Schwenkrichtung in die wenigstens eine weitere Stellung 38 bewegte bzw. verschwenkte Deckelelement 40 in der wenigstens einen Stellung 37, 38 gegen ein weiteres Bewegen bzw. Verschwenken in der Bewegungs- bzw. Schwenkrichtung zu sichern. Hierbei kann die Sicherungseinrichtung 49 nach Art einer Endlagenbegrenzung ausgelegt sein, sodass ein Weiterbewegen des Deckelelements 40 über eine vordefinierte Position und/oder Ausrichtung verhindert wird. Alternativ oder zusätzlich kann die Sicherungseinrichtung 49 nach Art einer temporären Position- und/oder Lagefixierung des Deckelelements 40 dienen, sodass dieses in vordefinierten oder durch den Bediener frei wählbaren Sollausrichtungen (a-Werten) fixierbar bzw. haltbar ist.

Beispielsweise ist die Sicherungseinrichtung 49 eingerichtet, Bewegungen des in die wenigstens eine weitere Stellung 38 bewegten bzw. verschwenkten Deckelelements 40 in der Bewegungs- bzw. Schwenkrichtung bis zu einem Maximalkraft- oder Maximaldrehmomentgrenzwert zu sperren. Nach Überschreiten dieses Maximalkraft- oder Maximaldrehmomentgrenzwerts kann aufgrund der Sicherungseinrichtung 49 ein Lösen des Deckelelements 40 von dem Armlehnenteil 3 erfolgen. Hierbei kann die Sicherungseinrichtung 49 beispielsweise eingerichtet sein, Bewegungen des in die wenigstens eine weitere Stellung 38 bewegten bzw. verschwenkten Deckelelements 40 in der Bewegungs- bzw. Schwenkrichtung bei einem oberhalb des Maximalkraft- oder Maximaldrehmomentgrenzwerts an dem Deckelelement 40 anliegenden Kraft oder Drehmoment, ein weiteres Bewegen bzw. Verschwenken des Deckelelements 40 in der Bewegungs- bzw. Schwenkrichtung ohne Beschädigung oder Zerstörung der Deckeleinrichtung 34 freizugeben. Auch kann das Lösen der Deckeleinrichtung 34 und/oder des Deckelelements 40 derart erfolgen, dass es nach einem Lösen, insbesondere werkzeuglos, wieder an das Armlehnenteil 3 montiert werden kann.

Das Deckelelement 40 kann beispielsweise über einen Scharnierabschnitt 50 mit dem Armlehnenteil 3 drehbeweglich verbunden ist, wobei in einem vollständig aufgeklappten Zustand des Deckelelement 40, in einer Schnittebene senkrecht zur Deckelrotationsachse 36 des Scharnierabschnitts 50 das Deckelelement 40 an wenigstens zwei Kontaktabschnitten 51, 52 an einer armlehnenteilseitigen Lagerungsstruktur 53 anliegt. Dadurch, dass innerhalb einer Schnittebene senkrecht zur Deckelrotationsachse 36 zwei deckelelementseitige Kontaktabschnitte 51, 52 an der armlehnenseitigen Lagerungsstruktur 53 (an zwei beabstandeten Orten) anliegen, kann eine zweckmäßige Kraftverteilung von auf das Deckelelement 40 im geöffneten Zustand einwirkenden Ablagekräften ermöglicht werden.

Es ist möglich, dass durch den Kontakt der Kontaktabschnitte 51, 52 mit der entsprechenden Lagerungsstruktur 53, insbesondere an den Kontaktabschnitten 51, 52 zugeordneten Lagerungsstrukturkontaktabschnitten der Lagerungsstruktur 53 die die Drehachse selbst bildenden Elemente im vollständig geöffneten Zustand des Deckelelements 40 kraftlos sind. Mit anderen Worten kann das Deckelelement 40 während der Bewegung von einer Geschlossenstellung in eine Offenstellung durch ein Lagerungsmittel bzw. einen drehbar gelagerten Zapfen in seiner Drehbewegung geführt sein, wobei bei Erreichen der Endlage dieses Lagerungsmittel bzw. dieser Zapfen durch den Kontakt der Kontaktabschnitte 51, 52 mit diesen zugeordneten Lagerungsstrukturkontaktabschnitten dieses Lagerungsmittel bzw. die Zapfen kraftlos oder zumindest teilweise, bevorzugt überwiegend, eine reduzierte kraftübertragende Tragfunktion für das Deckelelement 40 innehat.

Ein erster Kontaktabschnitt 51 und ein weiterer Kontaktabschnitt 52 bezogen auf die Deckelrotationsachse 36 können beispielsweise einen Winkel β von mindestens 25°, bevorzugt von mindestens 45°, besonders bevorzugt von mindestens 90°, höchst bevorzugt von mindestens 110°, weiter bevorzugt von mindestens 120°, zueinander einschließen. Durch derart große Winkelwerte für den Winkel β kann erreicht werden, dass die deckelelementseitigen Lagerkräfte durch den Kontakt der armlehnenseitigen Lagerungsstruktur 53 zweckmäßig vorliegt und damit hohe Lagerkräfte zuverlässig aufgenommen werden können.

Ein erster Kontaktabschnitt 51 und ein weiterer Kontaktabschnitt 52 können beispielsweise bezogen auf die Deckelrotationsachse 36 einen Winkel β von maximal 180°, bevorzugt von maximal 165°, besonders bevorzugt von maximal 145°, höchst bevorzugt von maximal 135°, weiter bevorzugt von maximal 130°, zueinander einschließen. Die Begrenzung des Winkels β in seinem Maximalwert kann zweckmäßig sein, um die Baugröße und die vorzuhaltende Aufnahmeöffnung für ein Ineinanderverschachteln bzw. Ineinanderverfahren von Deckelelement 40 und armlehnenseitiger Lagerungsstruktur auf ein zweckmäßiges Maß begrenzt wird, jedoch aufgrund der weiter oben beschriebenen Mindestwerte des Winkels β eine hinreichend hohe Stabilität erzielt.

Die Deckeleinrichtung 34 kann optional an dem freien Ende 54 oder im Bereich eines freien Endes 54 des Armlehnenteils 3 an diesem angeordnet sein, wobei das in die wenigstens eine weitere Stellung 38 bewegte Deckelelement 40 eine Verlängerung des Armlehnenteils 3 über einen Grundkörper des Armlehnenteil 3 hinaus bildet. So ist beispielsweise in Figur 2 ersichtlich, dass das aufgeklappte Deckelelement 40 die zur Verfügung stehende "Nutzungsfläche" im Bereich der oberen Begrenzungsebene des Armlehnenteils 3 signifikant erhöht und dies mit minimalem Materialaufwand ermöglicht.

Das Armlehnenteil 3 kann beispielsweise eine wenigstens ein durch eine Vertiefung 30 definiertes Aufnahmeelement 31 für einen Drittgegenstand 32 umfassende Aufnahmeeinrichtung 33 umfassen, wobei das Aufnahmeelement 31 an einem oberen Rand 60 der Vertiefung 30 wenigstens zwei einander zulaufende Auflageabschnitte 61, 62 und in einem Boden- und/oder Seitenwandbereich der Vertiefung 30 einen Anlageabschnitt 65, 66 aufweist.

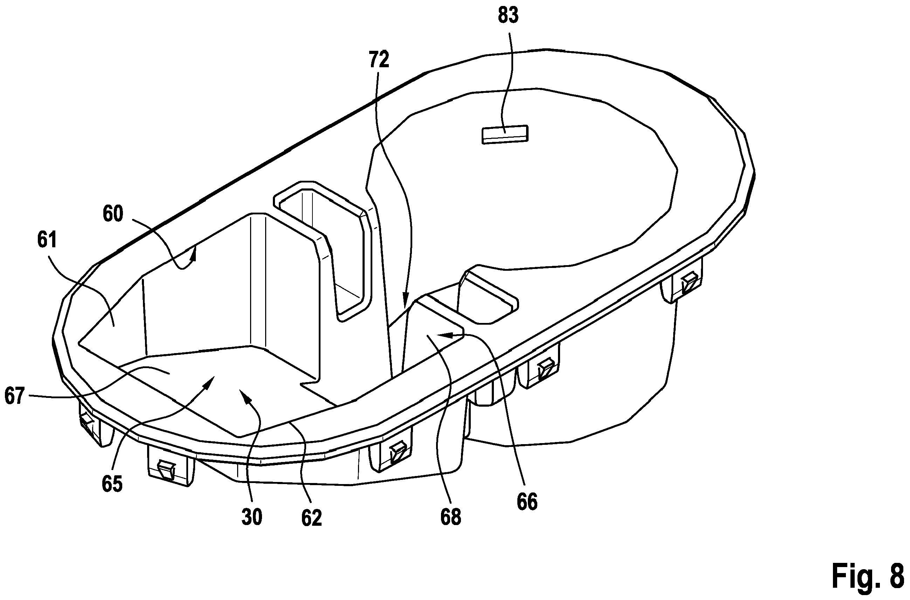

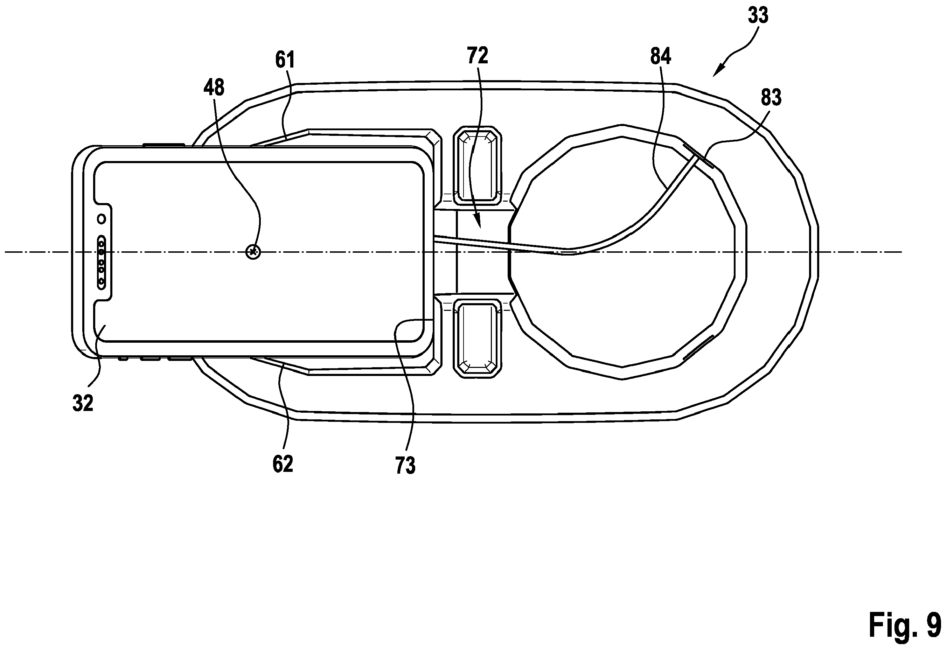

Die Aufnahmeeinrichtung 33 kann für ein Fahrzeug zur Aufnahme eines Drittgegenstands 32, insbesondere eines Smartphones, umfassend wenigstens ein eine Vertiefung 30 aufweisendes Aufnahmeelement 31 für einen Drittgegenstand 32, umfassen. Das Aufnahmeelement 31 kann an einem oberen Rand 60 der Vertiefung 30 wenigstens zwei einander zulaufende Auflageabschnitte 61, 62 zur Lagerung des Drittgegenstands 32 und in einem Boden- und/oder Seitenwandbereich 63, 64 der Vertiefung 30 einen Anlageabschnitt 65, 66 zur Lagerung des Drittgegenstands 32 aufweisen. In der dargestellten beispielhaften Ausführungsform weist der Drittgegenstand eine längliche quaderartige bzw. quaderförmige Grundform auf. Grundform meint in diesem Zusammenhang, dass der Drittgegenstand auch "abgeschnittene" bzw. abgerundete oder anderweitig von einer strengen Quaderform abweichende Kanten und/oder Ecken aufweisen kann. Vielmehr meint eine quaderförmige Grundform, dass diese im Wesentlichen sechs sich paarweise gegenüberliegende parallele Oberflächen aufweist, wobei die kurze Seite mindestens die Hälfte, bevorzugt mindestens dem Viertel, besonders bevorzugt mindestens dem Achtel, höchst bevorzugt mindestens dem Fünfzehntel, der Länge der Längsseite aufweist. Allgemein kann beispielsweise auf typische Grundformen von Handys, insbesondere Smartphones, für den Drittgegenstand 32 abgestellt werden, vgl. Figuren 8 und 9.

Die Aufnahmeeinrichtung 33 kann beispielsweise in oder an einem Fahrzeuginterieurbauteil befestigt oder aufgenommen sein, insbesondere ist die Aufnahmeeinrichtung 33 Bestandteil eines Armlehnenteils 3 eines Fahrzeugs, vgl. Figur 2. Alternativ oder zusätzlich zu einer Armlehne 3 im Fahrzeugfond kann die Aufnahmeeinrichtung 33 an einer Türseitenverkleidung und/oder an einer Sitzbank und/oder an einem Armaturenbrett und/oder an einer Fahrzeugsäulenverkleidung und/oder an einer vorderen Mittelkonsole angeordnet oder ausgebildet sein.

Wenigstens ein Auflageabschnitt 61, 62, insbesondere sämtliche Auflageabschnitte 61, 62, kann bzw. können beispielsweise als Kante ausgebildet sein. Durch die kantenartige Ausbildung des wenigstens einen Auflageabschnitts 61, 62 kann sich im Falle eines Kontakts mit dem Drittgegenstand 32, insbesondere mit einer Begrenzungskante des Drittgegenstands 32, eine punktuelle Kontaktstelle zwischen dem Auflageabschnitt 61, 62 und dem Drittgegenstand 32 ergeben. Eine punktuelle Kontaktstelle oder eine geringe Kontaktfläche zwischen Drittgegenstand 32 und der einander zulaufenden Auflageabschnitte 61, 62 kann dahingehend vorteilhaft sein, dass eine Zentrier- und/oder Führungsfunktion zur, insbesondere schwerkraftbedingen, Ausrichtung des Drittgegenstands 32 vereinfacht und/oder unter geringem Reibeinfluss ausführbar ist bzw. ausgeführt wird. Die zusätzliche oder alternative Ausgestaltung des zumindest einen Anlageabschnitts als Anlagefläche 67, 68 kann ein vereinfachtes vorgesehenes Einlegen und/oder Ausrichten des Drittgegenstands 32 ermöglichen bzw. unterstützen.

Gemäß dem beispielsweise in Figur 8 gezeigten Ausführungsbeispiel kann der Anlageabschnitt 65, 66 optional wenigstens zwei Anlageflächen 67, 68 aufweisen, wobei eine Haupterstreckungsebene 69 einer zumindest abschnittsweisen, bevorzugt überwiegenden, besonders bevorzugt vollständig, ebenen ersten Anlagefläche 67 mit der Haupterstreckungsebene 70 einer weiteren, zumindest abschnittsweise, bevorzugt überwiegend, besonders bevorzugt vollständig, eben ausgebildeten weiteren Anlagefläche 68 einen Winkel γ von kleiner 90°, bevorzugt kleiner 80°, besonders bevorzugt kleiner 75°, höchst bevorzugt kleiner 70°, einschließen. Dadurch, dass die beiden Anlageflächen 67, insbesondere eine erste, den Boden bildende, bevorzugt ebenen, Anlagefläche 67 und eine weitere, insbesondere eine Seitenwand der Vertiefung 30 ausbildenden, bevorzugt ebenen, Anlagefläche 68 einen Winkel γ kleiner 90° einschließen, kann auf einfache Weise eine, insbesondere schwerkraftbedingte, selbstzentrierende Einführbewegung des Drittgegenstands 32 erreicht werden. Damit wird die Leistungsflächigkeit der Aufnahmeeinrichtung 33 dahingehend gesteigert werden, dass im Falle einer definierten Aufnahmesituation des Drittgegenstands 32 geometrische Maßnahmen zum Halten des Drittgegenstands 32 trotz etwaiger Kurvenkräfte bei Kurvenfahrt des die Aufnahmeeinrichtung 33 aufweisenden Fahrzeugs zuverlässig gehalten werden kann.

Der Anlageabschnitt 65 kann beispielsweise wenigstens eine Bodenanlagefläche 67 aufweisen, wobei eine Haupterstreckungsebene 69 der zumindest abschnittsweise, bevorzugt überwiegend, besonders bevorzugt vollständig, eben ausgebildeten Bodenanlagefläche 67 mit einer Grunderstreckungsebene 71 der Aufnahmeeinrichtung 33 oder einer Horizontalebene im bestimmungsgemäßen Einsatz der Aufnahmeeinrichtung 33 einen Winkel δ von größer 5°, bevorzugt von größer 10°, besonders bevorzugt von größer 15°, höchst bevorzugt von größer 17,5°, weiter bevorzugt von größer 20°, einschließt. Die Horizontalebene bzw. die Grunderstreckungsebene 71 erlaubt eine Einordnung der Bodenanlagefläche 67 im Lichte der Erdanziehungskraft, da die Grunderstreckungsebene 71 im bestimmungsgemäßen Gebrauch parallel zur Armauflagefläche 2 des Armlehnenteils 3 ausgerichtet ist, sofern sich die Aufnahmeeinrichtung 33 in oder an einem Armlehnenteils 3 befindet.

Das die Vertiefung 30 definierende Aufnahmeelement 31 kann beispielsweise in der Draufsicht eine n-eckige Grundform aufweisen, bevorzugt weist das Aufnahmeelement 31 eine mindestens 5-eckige Grundform auf, besonders bevorzugt weist das Aufnahmeelement 31 eine mindestens 6-eckige Grundform auf. Die Draufsicht kann hierbei senkrecht zur Haupterstreckungsebene bzw. zur Grunderstreckungsebene 71 der Aufnahmeeinrichtung 33 ausgerichtet sein. Das die Vertiefung 30 definierende Aufnahmeelement 31 kann alternativ oder zusätzlich in der Draufsicht eine mit einer Unterbrechung 72 versehene, insbesondere geradlinige, Grundkante 73 einer Grundform aufweisen. Die Unterbrechung 72 kann beispielsweise verwendet werden, um ein Ladekabel oder dergleichen von einem ersten Bereich einer Vertiefung 30 der Aufnahmeeinrichtung 31 zu einem weiteren Bereich dieser oder einer weiteren Vertiefung 30 der Aufnahmeeinrichtung 31 zu legen und/oder zu bewegen, ohne dass dabei das Ladekabel die Vertiefung 30 verlassen muss bzw. ohne, dass das Ladekabel aus dem Haupterstreckungsvolumen der Aufnahmeeinrichtung 31 herausgeführt werden muss.

Wenigstens ein als Auflagekante ausgebildeter Auflageabschnitt 61, 62 kann beispielsweise in seiner Haupterstreckungslinie 74, 75, insbesondere beide Auflagekanten jeweils mit deren Haupterstreckungslinien 74, 75, mit dem als Grundkante 73 ausgebildeten Auflageabschnitt 61 in der Draufsicht einen Innenwinkel ε zum Innenraum 76 der Vertiefung 30 von kleiner 90°, bevorzugt von kleiner 85°, besonders bevorzugt von kleiner 80°, höchst bevorzugt von kleiner 75°, aufweisen. Alternativ oder zusätzlich können die beiden Haupterstreckungslinien 74, 75 der Auflageabschnitte 61, 62 einen Winkel ζ im Bereich von 20° bis 50°, bevorzugt von 25° bis 40°, besonders bevorzugt von 30° bis 35°, einschließen. Durch eine derart spitzwinklige Anordnung der beiden Haupterstreckungslinien 74, 75 der Auflageabschnitte 61, 62 kann deren einander zulaufen entsprechend ausgeprägt sein und damit eine, insbesondere schwerkraftbedingte, Zentrierung und/oder Führung des Drittgegenstands im eingesetzten Zustand zumindest abschnittsweise entlang der Auflageabschnitte 61, 62 erfolgen.

Die Auflageabschnitte 61, 62, insbesondere die als Auflagekanten ausgebildeten Auflageabschnitte 61, 62, können beispielsweise spiegelsymmetrisch ausgebildet sein. Bevorzugt sind die Auflageabschnitte 61, 62, insbesondere die Auflagekanten spiegelsymmetrisch zu einer Längsachse 77 des Einsatzes 78 und/oder der Aufnahmeeinrichtung 33 ausgebildet. Die spiegelsymmetrische Ausbildung der Auflageabschnitte 61, 62 ermöglicht eine vereinfachte Benutzung der Aufnahmeeinrichtung, da unabhängig von dem Standort einer Bedienperson eine gleichartige Struktur zum Einbringen des Drittgegenstands 32 ermöglicht wird.

Die Aufnahmeeinrichtung 33 kann beispielsweise einen wenigstens eine Vertiefung 30 aufweisenden Grundkörper 79 und einen in der grundkörperseitigen Vertiefung 30 angeordneten oder ausgebildeten, das wenigstens eine Aufnahmeelement 31 bildenden Einsatzkörper (nicht dargestellt) korrespondierender Geometrie aufweisen. Mit anderen Worten kann der Grundkörper 79 zumindest abschnittsweise, bevorzugt überwiegend, besonders bevorzugt vollständig, mit einem als Überzug und/oder als Beschichtung ausgebildeten Einsatzkörper versehen sein. Damit wird die zum Innenraum der Vertiefung 30 weisende Oberfläche des Grundkörpers 79 zumindest abschnittsweise mit dem Material des Einsatzkörpers überdeckt. Folglich kann Einsatzkörper als unmittelbarer Kontaktkörper zum Kontakt des Drittgegenstands 32 dienen. Die die Vertiefung 30 in dem Grundkörper 79 definierenden Radien 81 bzw. Winkel können kleiner als die die Vertiefung 30 in dem Einsatzkörper definierenden Radien bzw. Winkel ausgebildet sein. Folglich kann der Grundkörper 79 beispielsweise durch ein Spritzgussverfahren hergestellt werden und zumindest abschnittsweise relativ kleine Radien 81 aufweisen, jedoch wird durch den zum Innenraum die grundkörperseitigen Radien 81 überdeckenden Einsatzkörperabschnitte und dessen im Vergleich größere Radien das Mindestmaß der zugänglichen Radien der Aufnahmeeinrichtung definieren bzw. bestimmen.

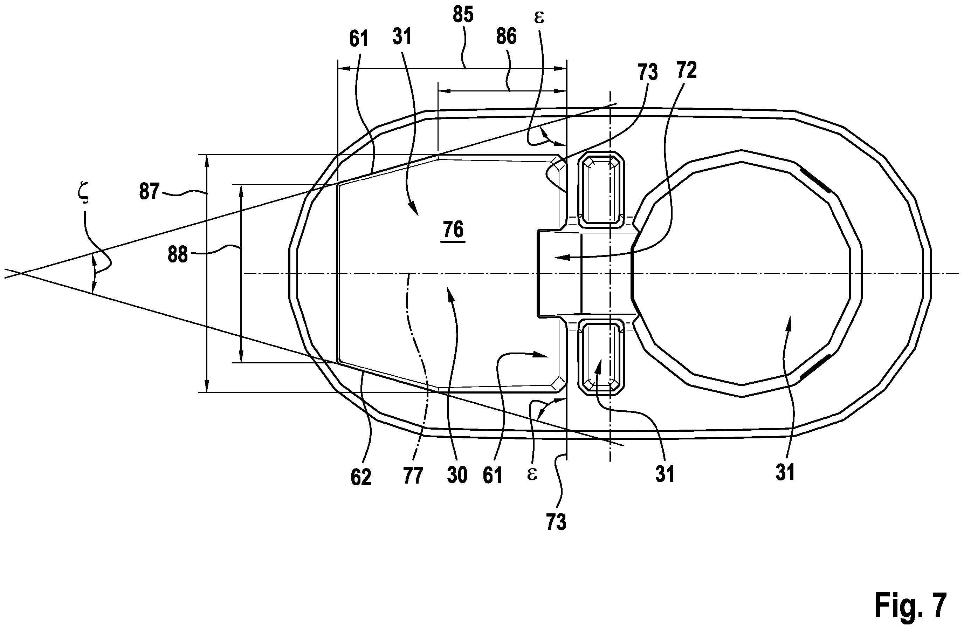

Die Aufnahmeeinrichtung, insbesondere der Einsatzkörper, kann beispielsweise zumindest abschnittsweise, bevorzugt überwiegend, besonders bevorzugt vollständig, aus einem weich-elastischen Kunststoffmaterial, insbesondere einem thermoplastischen Elastomer, ausgebildet sein. Alternativ oder zusätzlich kann die Aufnahmeeinrichtung 33 beispielsweise mehrere Aufnahmeelemente 31 zumindest abschnittsweise, gegebenenfalls vollständig, unterschiedlicher Grundform aufweisen. So weist ist beispielsweise aus den Figuren 8 bis 10 erkennbar, dass die Aufnahmeeinrichtung 33 drei unterschiedliche Aufnahmeelemente 31 umfassen kann. Die in Figur 7 links dargestellte Aufnahmeelement 31 kann zur schrägliegenden Aufnahme eines Smartphones, das mittig dargestellte Aufnahmeelement 31 zur stehenden Aufnahme eines Smartphones und das rechte Aufnahmeelement 31 zur Aufnahme eines Flüssigkeitsbehältnisses, insbesondere eines Getränkebehältnisses, dienen.

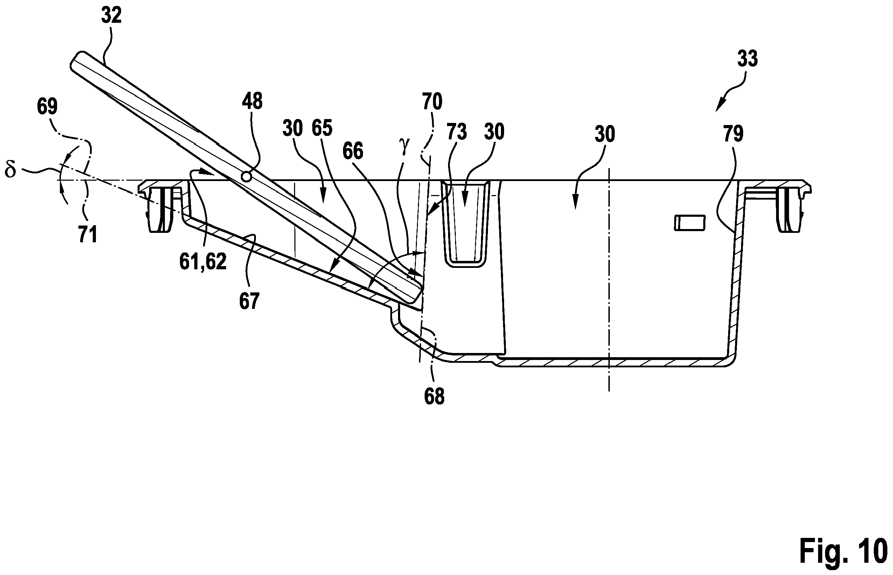

In Figur 9 ist der Schwerpunkt 48 des Drittgegenstands 32 angezeigt, es ist hieraus ersichtlich, dass dieser in der Draufsicht innerhalb der Grundform der Vertiefung 30 bzw. des die Vertiefung 30 begrenzenden Umrandung liegt. Gemäß Figur 10 kann es vorgesehen sein, dass der Schwerpunkt 48 des Drittgegenstands 32 innerhalb der Vertiefung 30 liegt und/oder im Nahbereich der Begrenzungskante der Vertiefung 30 platziert ist, im bestimmungsgemäßen Gebrauch der Aufnahmeeinrichtung 33, d. h. bei eingesetzten Drittgegenstand 32 in die Vertiefung 30, vgl. Figur 10.

Es ist möglich, dass die Vertiefung 30 bzw. die Aufnahme der Aufnahmeeinrichtung 31 mit den einander zulaufenden Kanten 61, 62 eine maximale Tiefe von maximal 80 mm, bevorzugt von maximal 70 mm, besonders bevorzugt von maximal 60 mm, höchst bevorzugt von maximal 50 mm, weiter bevorzugt von maximal 45 mm, aufweist. Diese maximale Tiefe kann beispielsweise die Tiefe betreffen, welche im bestimmungsgemäßen Gebrauch der Aufnahmeeinrichtung 31 den tiefsten Punkt zur Abstützung des Drittgegenstands 32 tatsächlich oder potentiell ausbildet. Beispielsweise wird der tiefste Punkt als Schnittpunkt der längsten Anlageabschnitts 66 bzw. der Seitenwand 66 sowie des, insbesondere schräg nach unten verlaufenden, Bodens der Vertiefung 30 gebildet.

Die maximale Tiefe der Vertiefung 30 bzw. die maximale Tiefe der Aufnahme der Vertiefung 30 kann beispielsweise, insbesondere in der Draufsicht aus betrachteten, zu ersten und/oder zweiten Länge 85, 87 ein Verhältnis von maximal 1,0, bevorzugt von maximal 0,85, besonders bevorzugt von maximal 0,70, höchst bevorzugt von maximal 0,60, weiter bevorzugt von maximal 0,55, aufweisen. Damit weist die Vertiefung 30 eine eher flachte Tiefe im Vergleich zu dessen Länge 85, 87, insbesondere in Längs- und/oder Querrichtung relativ zu einer Sollausrichtung eines länglichen Drittgegenstands 32 innerhalb der Aufnahmeeinrichtung 33 bzw. des Aufnahmeelements 31 auf.

Damit eine vordefinierte bzw. typische Bauform eines Drittgegentands 32, insbesondere eines Handys, in einer vorteilhaften Position der Vertiefung 30 des Aufnahmeelements 31 aufnehmbar ist, kann es sich als zweckmäßig erweisen, wenn die Vertiefung 30 in der Draufsicht eine mehreckige Grundform aufweist. Beispielsweise kann die Aufnahme bzw. die Vertiefung 30 des Aufnahmeelements 31 derart ausgebildet sein, dass dieses eine, insbesondere aus der Draufsicht aus betrachtet - vgl. Figur 7 -, erste Länge 85 und/oder eine zweite Länge 87 im Bereich von 60 mm bis 100 mm, bevorzugt von 70 mm bis 90 mm, besonders bevorzugt von 75 mm bis 85 mm, aufweist. Die erste Länge 85 kann beispielsweise parallel zu einer Längsachse 77 einer Aufnahmeeinrichtung 33, insbesondere eines als Einsatz 78 ausgebildeten Aufnahmeeinrichtung 33, ausgerichtet sein. Die erste und die zweite Länge 85, 87 können beispielsweise rechtwinklig zueinander verlaufen. In einer beispielhaften Ausführungsform weist die erste Länge 85 zu der zweiten Länge 87 ein Verhältnis von 0,80 bis 1,00, bevorzugt von 0,85 bis 0,99, besonders bevorzugt von 0,90 bis 0,98, höchst bevorzugt von 0,95 bis 0,97, auf.

Wie in Figur 7 gezeigt, kann die Geometrie der Vertiefung 30 bzw. der Aufnahme des Aufnahmeelements 31 in der Draufsicht aus betrachtet im Wesentlichen einen trapezförmigen Teilabschnitt aufweisen. Dieser trapezförmige Teilabschnitt zeichnet sich durch die beiden einander zulaufenden Kanten 61, 62 der Vertiefung 30 bzw. der Aufnahme aus. Der maximale Abstand kann der oben erwähnten zweiten 87 bzw. der hierzu erwähnten Wertebereiche entsprechen. Der minimale Abstand 88 der beiden einander zulaufenden Kanten 61, 62 kann beispielsweise 40 mm bis 80 mm, bevorzugt 50 mm bis 70 mm, besonders bevorzugt 57 mm bis 67 mm, höchst bevorzugt 60 mm bis 64 mm, entsprechen. Die Länge rechtwinklig zu dem maximalen und/oder minimalen Abstand 88 wenigstens einer, insbesondere beider, einander zulaufenden Kante(n) kann beispielsweise zwischen kann beispielsweise zwischen 20 mm und 50 mm, bevorzugt zwischen 30 mm und 40 mm, besonders bevorzugt zwischen 33 mm und 38 mm, betragen.

Ein weiterer Vorteil bzgl. der hierin beschriebenen Längen, Winkel und deren Verhältnisse der Aufnahmeeinrichtung 33 bzw. deren Vertiefung 30 ist darin zu erkennen, dass im Falle eines als Smartphones ausgebildeten Drittgegenstands 32 dessen auf der Rückseite und/oder Unterseite des Drittgegenstands angeordneten Lautsprechen gut Schall ausbringen können. So kann beispielsweise der schräg verlaufende Boden als Reflexionsfläche dienen, um den Schall nach oben zur Öffnung der Vertiefung 30 und damit zu einem Fahrzeuginsassen umzulenken. Ferner weist der Drittgegenstand 32 in der bestimmungsgemäßen Zielposition in der Vertiefung 30 einen zum theoretischen Schnittpunkt der einander zulaufenden Kanten 61, 62 einen Luftspalt auf, welcher zur Ausbreitung von an den Seitenwänden und dem, insbesondere schrägen, Boden der Vertiefung 30 reflektierten Schall nach oben bzw. außerhalb der Vertiefung 30 beitragen kann.

In der dargestellten beispielhaften Ausführungsform schließt sich dem trapezförmigen Teilabschnitt ein im Wesentlichen rechteckiger Teilabschnitt an, wobei beide Teilabschnitte Teil der Vertiefung bilden. Die Länge beider Teilabschnitte kann beispielsweise der ersten Länge 85 entsprechend und die zu der ersten Länge 85 oben erwähnten Werte aufweisen. Hierbei kann beispielsweise der rechteckige Teilabschnitt als Teil der Länge 85 eine Länge 86 von 25 mm bis 65 mm, bevorzugt von 35 mm bis 55 mm, besonders bevorzugt von 40 mm bis 50 mm, höchst bevorzugt von 43 mm bis 47 mm, aufweisen.

Die in den vorherigen Absätzen erwähnten expliziten Bereiche für die Dimensionierung der Vertiefung 30 bzw. für die Aufnahme zur Aufnahme des Drittgegenstands 32 und/oder die hieraus ableitbaren Verhältnisse einzelner geometrischer Größen der Vertiefung 30 ermöglichen eine vorteilhafte Halterung eines für Smartphones typische Abmessungen aufweisende Drittgegenstände 32. Die angegebenen Maße, insbesondere in Kombination mit einem schräg verlaufenden Bodenbereich der Vertiefung 30, spiegeln eine vorteilhafte - weil Zentrierungs- und/oder Führungsfunktion und zugleich eine in der Endlagenposition bzw. in der Ruheposition vorteilhafte Ausrichtung eines Drittgegenstands 32, insbesondere eines Smartphones wider. Sowohl das Einsetzen als auch die Entnahme des Drittgegenstands 32, insbesondere eines Smartphones, kann durch dessen schräge Anordnung innerhalb der Aufnahmeeinrichtung 33 für eine Peron vereinfacht ausgeführt werden. Auch die Bedienbarkeit wird durch die Schrägstellung für eine Bedienperson vereinfacht, da ein gewisser Freiraum vor dem Drittgegenstand 32 auch innerhalb der Vertiefung 30 vorgehalten werden kann, welcher zu manuellen Bedienung von dort angeordneten Eingabeelementen des Drittgegenstands 32 genutzt werden kann, z. B. ein Home-Button eines als Smartphone ausgebildeten Drittgegenstands 32.

Dabei kann die Aufnahmeeinrichtung 33 wenigstens ein, insbesondere buchsen- oder steckerartiges, Anschlusselement 83 zum Anschluss eines Lade- und/oder Datenübertragungselements 84 zugeordnet sein. So ist es möglich, dass für die Ausführungsform mit den drei Aufnahmeelementen 31, in dem für das Getränkebehältnis bestimmten (rechten) Aufnahmeelement 31 eine Anschlussbuchse bzw. ein Anschlusselement 83 für ein Lade- und/oder Datenübertragungselement 84 vorgesehen ist, sodass im aufgenommenen Zustand eines Smartphones oder eines anderweiten mobilen elektronischen Einrichtung in dem linken und/oder in dem mittigen Aufnahmeelement 31 ein Anschluss des jeweiligen Smartphones bzw. mobilen elektronischen Einrichtung über das Lade- und/oder Datenübertragungselement 84 an dem Anschlusselement 83 ermöglicht wird. Hierzu dient insbesondere der im Zusammenhang mit der Unterbrechung 72 der Grundkante 73 beschriebene Durchbruch bzw. Durchführbereich innerhalb der Aufnahmeeinrichtung 33.

## Patentansprüche

1. Aufnahmeeinrichtung (33) für ein Fahrzeug zur Aufnahme eines Drittgegenstands (32), insbesondere eines Smartphones, umfassend wenigstens ein eine Vertiefung (30) aufweisendes Aufnahmeelement (31) für einen Drittgegenstand (32), wobei das Aufnahmeelement (31) an einem oberen Rand (60) der Vertiefung (30) wenigstens zwei, insbesondere einander zulaufende, Auflageabschnitte (61, 62) zur Lagerung des Drittgegenstands (32) und in einem Boden- und/oder Seitenwandbereich (63, 64) der Vertiefung (30) einen Anlageabschnitt (65, 66) zur Lagerung des Drittgegenstands (32) aufweist.

2. Aufnahmeeinrichtung (33) nach Anspruch 1, **dadurch gekennzeichnet, dass** die Aufnahmeeinrichtung (33) in oder an einem Fahrzeuginterieurbauteil befestigt oder aufgenommen ist, insbesondere ist die Aufnahmeeinrichtung (33) Bestandteil eines Armlehnenteils (3) eines Fahrzeugs.

3. Aufnahmeeinrichtung (33) nach Anspruch 1 oder 2, **dadurch gekennzeichnet, dass** wenigstens ein Auflageabschnitt (61, 62), insbesondere sämtliche Auflageabschnitte (61, 62), als Kante ausgebildet ist oder sind und/oder der Anlageabschnitt (65, 66) als zumindest eine Anlagefläche (67, 68) ausgebildet ist.

4. Aufnahmeeinrichtung (33) nach einem der vorhergehenden Ansprüche, **dadurch gekennzeichnet, dass** der Anlageabschnitt (65, 66) wenigstens zwei Anlageflächen (67, 68) aufweist, wobei eine Haupterstreckungsebene (69) einer zumindest abschnittsweisen, bevorzugt überwiegenden, besonders bevorzugt vollständig, ebenen ersten Anlagefläche (67) mit der Haupterstreckungsebene (70) einer weiteren, zumindest abschnittsweise, bevorzugt überwiegend, besonders bevorzugt vollständig, eben ausgebildeten weiteren Anlagefläche (68) einen Winkel γ von kleiner 90°, bevorzugt kleiner 80°, besonders bevorzugt kleiner 75°, höchst bevorzugt kleiner 70°, einschließt.

5. Aufnahmeeinrichtung (33) nach einem der vorhergehenden Ansprüche, **dadurch gekennzeichnet, dass** der Anlageabschnitt (65) wenigstens eine Bodenanlagefläche (67) aufweist, wobei eine Haupterstreckungsebene (69) der zumindest abschnittsweise, bevorzugt überwiegend, besonders bevorzugt vollständig, eben ausgebildeten Bodenanlagefläche (67) mit einer Grunderstreckungsebene (71) der Aufnahmeeinrichtung (33) oder einer Horizontalebene im bestimmungsgemäßen Einsatz der Aufnahmeeinrichtung (33) einen Winkel δ von größer 5°, bevorzugt von größer 10°, besonders bevorzugt von größer 15°, höchst bevorzugt von größer 17,5°, weiter bevorzugt von größer 20°, einschließt.

6. Aufnahmeeinrichtung (33) nach einem der vorhergehenden Ansprüche, **dadurch gekennzeichnet, dass** das die Vertiefung (30) definierende Aufnahmeelement (31) in der Draufsicht eine n-eckige Grundform aufweist, bevorzugt weist das Aufnahmeelement (31) eine mindestens 5-eckige Grundform auf, besonders bevorzugt weist das Aufnahmeelement (31) eine mindestens 6-eckige Grundform auf.

7. Aufnahmeeinrichtung (33) nach einem der vorhergehenden Ansprüche, **dadurch gekennzeichnet, dass** das die Vertiefung (30) definierende Aufnahmeelement (31) in der Draufsicht eine mit einer Unterbrechung (72) versehene, insbesondere geradlinige, Grundkante (73) einer Grundform aufweist.

8. Aufnahmeeinrichtung (33) nach einer der vorhergehenden Ansprüche, **dadurch gekennzeichnet, dass** wenigstens ein als Auflagekante ausgebildeter Auflageabschnitt (61, 62) in seiner Haupterstreckungslinie (74, 75), insbesondere beide Auflagekanten jeweils mit deren Haupterstreckungslinien (74, 75), mit dem als Grundkante (73) ausgebildeten Auflageabschnitt (61) in der Draufsicht einen Innenwinkel ε zum Innenraum (76) der Vertiefung (30) im Bereich von kleiner 90°, bevorzugt von kleiner 85°, besonders bevorzugt von kleiner 80°, höchst bevorzugt von kleiner 75°, aufweist.

9. Aufnahmeeinrichtung (33) nach Anspruch 8, **dadurch gekennzeichnet, dass** die Auflageabschnitte (61, 62), insbesondere die als Auflagekanten ausgebildeten Auflageabschnitte (61, 62), spiegelsymmetrisch ausgebildet sind, bevorzugt sind die Auflageabschnitte (61, 62), insbesondere die Auflagekanten spiegelsymmetrisch zu einer Längsachse (77) des Einsatzes (78) und/oder der Aufnahmeeinrichtung (33) ausgebildet.

10. Aufnahmeeinrichtung (33) nach einem der vorhergehenden Ansprüche, **dadurch gekennzeichnet, dass** die Aufnahmeeinrichtung (33) einen wenigstens eine Vertiefung (30) aufweisenden Grundkörper (79) und einen in der grundkörperseitigen Vertiefung (30) angeordneten oder ausgebildeten, das wenigstens eine Aufnahmeelement (31) bildenden Einsatzkörper (80) korrespondierender Geometrie aufweist.

11. Aufnahmeeinrichtung (33) nach Anspruch 10, **dadurch gekennzeichnet, dass** die die Vertiefung (30) in dem Grundkörper (79) definierenden Radien (81) kleiner als die die Vertiefung (30) in dem Einsatzkörper (80) definierenden Radien (82) bzw. Winkel sind.

12. Aufnahmeeinrichtung (33) nach einem der vorhergehenden Ansprüche, **dadurch gekennzeichnet, dass** die Aufnahmeeinrichtung, insbesondere der Einsatzkörper (80), zumindest abschnittsweise, bevorzugt überwiegend, besonders bevorzugt vollständig, aus einem weich-elastischen Kunststoffmaterial, insbesondere einem thermoplastischen Elastomer, gebildet ist.

13. Aufnahmeeinrichtung (33) nach einem der vorhergehenden Ansprüche, **dadurch gekennzeichnet, dass** der Aufnahmeeinrichtung (33) wenigstens ein, insbesondere buchsen- oder steckerartiges, Anschlusselement (83) zum Anschluss eines Lade- und/oder Datenübertragungselements (84) zugeordnet ist.

14. Aufnahmeeinrichtung (33) nach einem der vorhergehenden Ansprüche **dadurch gekennzeichnet, dass** die Aufnahmeeinrichtung (33) in oder an einer Armlehnenanordnung (1) zum Verbau in einem Fond eines Kraftfahrzeugs angeordnet oder ausgebildet ist, wobei die Armlehnenanordnung (1) Folgendes umfasst:
- eine zur Lagerung eines eine Armauflagefläche (2) umfassenden Armlehnenteils (3) eingerichtete Tragstruktur (4), wobei die Tragstruktur (4) in einem rotatorischen Bewegungsfreiheitsgrad (5) um eine Rotationsachse (6) in eine erste Stellung (7) und in wenigstens eine weitere Stellung (8) bewegbar gelagert ist;
- ein eine Armauflagefläche (2) umfassendes Armlehnenteil (3), wobei das Armlehnenteil (3) in einem translatorischen Bewegungsfreiheitsgrad (9) entlang einer Translationsachse (10) in eine erste Translationsstellung (11) und in wenigstens eine weitere Translationsstellung (12) relativ zu der Tragstruktur (4) auf oder an der Tragstruktur (4) bewegbar gelagert ist.

15. Aufnahmeeinrichtung (33) nach einem der vorhergehenden Ansprüche, **dadurch gekennzeichnet, dass** die Aufnahmeeinrichtung (33) in oder an einer ein Armlehnenteil (3) umfassenden Armlehnenanordnung (1) angeordnet oder ausgebildet ist, wobei das Armlehnenteil (3) eine wenigstens ein, insbesondere durch eine Vertiefung (30) definiertes, Aufnahmeelement (31) für einen Drittgegenstand (32) umfassende Aufnahmeeinrichtung (33) umfasst, wobei der Aufnahmeeinrichtung (33) eine Deckeleinrichtung (40) zugeordnet ist, welche ein in einem rotatorischen Bewegungsfreiheitsgrad (35) um eine Deckelrotationsachse (36) in eine erste Stellung (37), in welchem keine Zugangsmöglichkeit in einen durch das wenigstens eine Aufnahmeelement (31) definierten Aufnahmeraum (39) gegeben ist, und in wenigstens eine weitere Stellung (38), in welchem eine Zugangsmöglichkeit in einen durch das wenigstens eine Aufnahmeelement (31) definierten Aufnahmeraum (39) gegeben ist, relativ zu dem Armlehnenteil (3) an dem Armlehnenteil (3) bewegbar gelagertes Deckelelement (40) umfasst.
